# EUROPÄISCHE PATENTANMELDUNG

(11) **EP 1 775 017 A2**
(43) Veröffentlichungstag der Anmeldung: **18.04.2007**
(21) Anmeldenummer: 06125774.7
(22) Anmeldetag: 23.12.2002
(51) Int. Cl.: B01J 13/02, B01J 13/20, A23L 1/22, A23P 1/04

(54) **Mononuklear gefüllte Mikrokapseln**

(30) Priorität: 24.12.2001 DE 10164110
(62) Teilanmeldung aus: 02795272.0
(71) Anmelder: Symrise GmbH & Co. KG, 37603 Holzminden (DE)
(72) Erfinder: Manos, Thomas, 10627 Berlin (DE); Fischer, Norbert, 37671 Höxter (DE); Chauchadis, Pierre, 37603,Holzminden (DE); Fexer, Wolfgang, 83558 Griesstätt (DE); Schütte, Christian, 37639 Bevern (DE)
(74) Vertreter: Eisenführ, Speiser & Partner

(57) **Zusammenfassung**

Beschrieben werden mononuklear gefüllte nahtlose Mikrokapseln, umfassend:
- eine Kapselhülle aus einem gehärteten Kapselmaterial auf Basis eines sauren Polysaccharids und
- allseitig von der Kapselhülle umschlossen ein Füllmaterial, umfassend eine organoleptisch wirksame Menge eines Aromas,

wobei die Mikrokapsel hitzestabil und/oder kochstabil und/oder frittierstabil ist und der Wasseranteil in der Kapselhülle auf einen Wert ≤50 Gew.-% eingestellt ist, bezogen auf die Gesamtmasse der Kapselhülle.

## Beschreibung

Die vorliegende Erfindung betrifft mononuklear gefüllte Mikrokapseln, Lebensmittelzusammensetzungen und sonstige Artikel, die eine oder mehrere mononuklear gefüllte Mikrokapseln umfassen sowie Verfahren zur Herstellung mononuklear gefüllter Mikrokapseln.

Im Bereich der Einkapselung von aktiven Inhaltsstoffen (Wirkstoffen auf bzw. in Trägermaterialien) treten insbesondere im Bereich der Lebensmitteltechnologie häufig Probleme auf, z.B. eine unvollständige Immobilisierung der Wirkstoffe auf bzw. in ihrem Trägermaterial.

Im Bereich der Systeme zur Funktionalisierung, insbesondere der Freisetzung (Freigabe) von aktiven Inhaltsstoffen (Wirkstoffen) aus Trägermaterialien resultieren derartige Probleme häufig aus einer nicht bedarfsgerechten, d.h. entweder unvollständigen oder aber verfrühten oder verspäteten Freisetzung der Wirkstoffe aus ihrem Trägermaterial.

Zwar sind für einzelne Anwendungsfälle, insbesondere in der Pharmazie, Agrarchemie, und Kosmetik, bereits Wirkstoff-Trägermaterial-Kombinationen gefunden worden, die den Anforderungen sowohl im Hinblick auf die Einkapselungseffizienz als auch hinsichtlich der Bedürfnisse der Praxis bezüglich Freisetzung entsprechen, doch wird in allen Industrienationen weiterhin mit großem Aufwand nach Systemen gesucht, die in bestimmten Anwendungsgebieten eine dem Bedarf entsprechende Freisetzung von Wirkstoffen aus einem Trägermaterial ermöglicht.

Zur Einkapselung und Funktionalisierung von Inhaltsstoffen in den Bereichen der Lebensmitteltechnologie und Lebensmittelchemie sind trotz großer Anstrengungen bisher nur wenige funktionierende Systeme entwickelt worden. Dies beruht zum Teil auf der eingeschränkten Zulassung möglicher Trägermaterialien für die jeweiligen Inhaltsstoffe. Insbesondere treten aber Probleme bei denjenigen Aromen auf, deren Zusammensetzung komplex ist, was sich in der Vielfalt der Flüchtigkeiten und der Polaritätsspanne der einzelnen Aromakomponenten des Aromas ebenso ausdrückt wie in der Empfindlichkeit einzelner oder mehrerer Aromakomponenten gegenüber äußeren Einflüssen.

Aus der äußerst umfangreichen Literatur zu Wirkstoff-Freisetzungssystemen sei zunächst auf die folgenden Dokumente verwiesen:

Brandau, Thorsten; Pharma + Food 3/2001, 8-12:

In diesem Dokument werden mikroverkapselte Wirkstoffe und Mikrokugeln in pharmazeutischen und kosmetischen Anwendungen beschrieben. Als Verfahren zur Herstellung von Mikrokugeln wird das sogenannte Mikrokugelverfahren angegeben, welches zu hochspherischen Granulaten (Vollkugeln) mit monomodaler Kornverteilung führt. Der oder die Wirkstoffe sind dabei in einer Matrix eines Trägermaterials gleichmäßig über die gesamte Kugel verteilt. Zudem werden Mikrokapseln beschrieben, zu deren Herstellung ein flüssiger oder verflüssigter Wirkstoff in einer festen Hülle eingebettet wird.
WO 93/02785

In diesem Dokument wird ein Verfahren zur Herstellung von Alginatkugeln (Vollkugeln) aus Tropfen einer Alginatlösung offenbart, die aus einer Düse abgegeben werden, wobei die Tropfen so in eine lonenlösung eingetropft werden, dass sie verfestigen. Die Alginatlösung wird dabei durch Schwingungsanregung zertropft. Mononuklear gefüllte Kapseln werden nicht offenbart.
WO 98/15191

Dieses Dokument offenbart ein Verfahren zur Herstellung von Kugeln (Beads) als Nahrungsmittel-Additiv, wobei diese Vollkugeln mit zumindest einem aktiven Inhaltsstoff aus der Gruppe der Aromastoffe beladen sind. Mononuklear gefüllte Kapseln werden nicht offenbart. Angaben über Inhaltsstoffe aus dem Gebiet der Aromen, insbesondere wasserunlöslicher Aromen, und technologische Vorteile des Trägermaterials im Hinblick auf Hitzestabilität werden offenbart, wobei jedoch deren Freisetzung nicht spontan, sondern kontinuierlich während der Herstellung oder der Zubereitung, insbesondere aber während der Lagerung des Nahrungsmittels erfolgt.
WO 98/15192:

Dieses Dokument offenbart ein Verfahren zur Herstellung von Kugeln (Beads) als Nahrungsmittel-Additiv, wobei in einem abschließenden Verfahrensschritt zuvor hergestellte wasserunlösliche Gelkugeln (Vollkugeln) mit zumindest einem aktiven, amphiphilen Inhaltsstoff nachträglich beladen werden.

Die Einkapselung von Geschmacksstoffen (Aromastoffen) in Kugeln (Beads) führt dazu, dass die Aromastoffe während der Weiterverarbeitung der Beads eine verbesserte Wärmestabilität und Wasserunlöslichkeit besitzen. Die Aromafreisetzung ist jedoch beim Kauen oder Zerbrechen der Bead-Partikel im Mund nicht instantan, sondern basiert auf einem kontinuierlichen und langsamen Prozess der Diffusion aktiver AromaKomponenten aus dem Einkapselungsmaterial heraus in die Lebensmittelmatrix. Dies wird insbesondere in der WO 98/15191 und der WO 98/15192 beschrieben.
EP 0 513 603 B1:

Dieses Dokument offenbart eine Vorrichtung zur Herstellung nahtloser Kapseln, bei der ein Flüssigkeitsstrom zur Bildung von Kapseln aus einer Mehrfachdüse geblasen wird, so dass sich Tropfen bilden, welche dann in Kontakt mit einer Härtungsflüssigkeit gebracht werden, um die nahtlosen Kapseln zu erzeugen. Diese nahtlosen Kapseln sind mononuklear gefüllt. Angaben zum Kapselmaterial werden nicht gemacht. Angaben über mögliche Inhaltsstoffe oder mögliche technologische Vorteile des Schalenmaterials in Anwendung werden ebenfalls nicht gemacht.

JP 11155480 A beschreibt mit öligen aromatischen Inhaltsstoffen gefüllte Mikrokapseln, die durch Reaktion von Polysacchariden wie Alginaten mit Calcium- oder Metallionen gewonnen werden und hitze- und wasserbeständig sind. Die Hülle der beschriebenen Kapseln weist jedoch einen hohen Wasseranteil von über 90 Gew.-% auf, bezogen auf die Kapselhülle.

JP 09065853 A beschreibt eine mit dem Aromastoff Wasabi gefüllte Mikrokapsel, die durch Verkapselung des Aromas mit Natriumalginat und einem Polysaccharid als Form- und Stabilisierungsadjuvans mittels eines Zweistromventils geformt und mit Calciumchlorid gehärtet wird. Auch hier besitzt das gehärtete Kapselhüllmaterial einen sehr hohen Wassergehalt von weit über 50 Gew.-%.

Ein hoher Wassergehalt in der Kapselhülle ist jedoch, wie eigene Untersuchungen erst im Rahmen der vorliegenden Erfindung gezeigt haben, für die Performance einer Kapsel und insbesondere für ihre Hitzestabilität und ihr Aroma-Rückhaltevermögen äußerst nachteilig.

Es war dementsprechend die primäre Aufgabe der vorliegenden Erfindung, ein Aromenfreisetzungssystem und ein Verfahren zu dessen Herstellung anzugeben, welches mit Blick auf die primäre Aromeneinkapselung effizient und bezüglich der Wahl der einzukapselnden Aromen so weit wie möglich universell einsetzbar ist, d.h. insbesondere nicht auf nur einige wenige öllösliche Essenzen beschränkt ist.

Darüber hinaus sollte es das anzugebende Verfahren vorzugsweise ermöglichen, ein zumindest im Wesentlichen wasserunlösliches Aromenfreisetzungssystem herzustellen, mit dem auch die Einkapselung wasserlöslicher Füllmaterialien möglich ist.

Des Weiteren sollte das System in seiner Aromenfreisetzung vorzugsweise Instant-Eigenschaften besitzen, d.h. die schlagartige Freisetzung eines Aromas zum gewünschten Zeitpunkt ermöglichen, bevorzugt während der Nahrungsaufnahme (burst effect).

Gleichzeitig sollten die anzugebenden Systeme vorzugsweise zumindest in einem solchen Maße scherkraftbeständig sein, dass sie nicht durch die üblicherweise bei der Herstellung oder Zubereitung eines Lebensmittels (Nahrungsmittels) auftretenden Scherkräfte zerstört werden.

Darüber hinaus sollte das anzugebende Aromenfreisetzungssystem hitzestabil und/oder kochstabil und/oder frittierstabil sein (zur Definition dieser Begriffe siehe unten).

In technologischer Hinsicht sollte das anzugebende Verfahren die kontinuierliche Erzeugung möglichst gleichförmiger Freisetzungssysteme ermöglichen.

Hinsichtlich des Aromen-Freisetzungssystems wird die primäre Aufgabe durch Angabe einer mononuklear gefüllten nahtlosen Mikrokapsel gelöst, die
- eine Kapselhülle aus einem gehärteten Kapselmaterial auf Basis eines sauren Polysaccharids und
- allseitig von der Kapselhülle umschlossen ein Füllmaterial, umfassend eine organoleptisch wirksame Menge eines Aromas,
umfasst,
wobei die Mikrokapsel hitzestabil und/oder kochstabil und/oder fritierstabil ist und der Wasseranteil in der Kapselhülle auf einen Wert ≤50 Gew.-% eingestellt ist, bezogen auf die Gesamtmasse der Kapselhülle.

Eine mononuklear gefüllte nahtlose Mikrokapsel wird dabei als hitzestabil angesehen, wenn sie ihre strukturelle Integrität bewahrt, wenn man sie für 15 Minuten einem Wasserbad bei 50 °C aussetzt. Ihre strukturelle Integrität ist dabei insbesondere dann bewahrt, wenn das Füllmaterial nach der Behandlung der Mikrokapsel nicht aus der Kapselhülle ausgetreten ist.

Eine erfindungsgemäße mononuklear gefüllte nahtlose Mikrokapsel wird als kochstabil angesehen, wenn sie ihre strukturelle Integrität bewahrt, wenn man sie für 5 Minuten einem Wasserbad bei 100 °C aussetzt. Ihre strukturelle Integrität ist dabei insbesondere dann bewahrt, wenn das Füllmaterial nach der Behandlung der Mikrokapsel nicht aus der Kapselhülle ausgetreten ist.

Eine erfindungsgemäße mononuklear gefüllte nahtlose Mikrokapsel wird als frittierstabil angesehen, wenn sie ihre strukturelle Integrität bewahrt, wenn man sie für 5 Minuten einem Frittierbad aus geschmolzenem Palmfett bei 180 °C aussetzt. Ihre strukturelle Integrität ist dabei insbesondere dann bewahrt, wenn das Füllmaterial nach der Behandlung der Mikrokapsel nicht aus der Kapselhülle ausgetreten ist.

Unter einer mononuklear gefüllten (Mikro-)Kapsel werden dabei im Rahmen des vorliegenden Textes ausschließlich Systeme verstanden, die eine definierte Kapsel (Kapselhülle, Schale) besitzen, welche einen einzigen (mono) Kern (Nukleus) aus Füllmaterial vollständig umschließt. Dabei kann die Schichtdicke der Kapselhülle variabel sein, vorzugsweise nimmt der Kern den weitaus größeren Teil des Kapselvolumens ein, um eine möglichst hohe Beladung der Kapsel zu ermöglichen. Der Begriff "mononuklear gefüllte Mikrokapsel" ist also insbesondere nicht für "Mikrokugeln" zutreffend, wie sie beispielsweise in dem besagten Artikel in Pharma + Food 3/2001 beschrieben sind. Letztgenannte Kugel-Systeme, bei denen der Wirkstoff als Emulsion oder Dispersion in dem Trägermaterial feinst verteilt eingebettet vorliegt, werden in der Literatur dementsprechend vielfach als "polynukleare Kapseln" bezeichnet. Eine Mikrokapsel im Sinne des vorliegenden Textes besitzt maximal ein Volumen von 65 mm³.

Eine erfindungsgemäße mononuklear gefüllte nahtlose Mikrokapsel kann insbesondere durch ein Verfahren mit den folgenden Schritten hergestellt werden:
- Bereitstellen eines flüssigen, eine organoleptisch wirksame Menge eines Aromas umfassenden Füllmaterials für die Mikrokapseln,
- Bereitstellen einer vorzugsweise wässrigen Lösung oder Dispersion eines härtbaren Kapselmaterials auf Basis eines sauren Polysaccharids,
- Bildung diskreter Tropfen aus dem flüssigen Füllmaterial für die Mikrokapseln und der Lösung oder Dispersion des härtbaren Kapsel(hüll)materials, so dass das härtbare Kapselmaterial das flüssige Füllmaterial in den Tropfen allseitig umschließt,
- Härten des härtbaren Kapsel(hüll)materials, so dass nahtlose Polysaccharid-Kapseln gebildet werden, die jeweils Füllmaterial mononuklear umfassen und hitzestabil und/oder kochstabil und/oder frittierstabil sind,
- Trocknen der gebildeten Kapselhülle, bis der Wasseranteil in der Kapselhülle einen Wert ≤50 Gew.-% erreicht, bezogen auf die Gesamtmasse der Kapselhülle.

Vorzugsweise wird das flüssige Füllmaterial hergestellt, indem eine Lösung oder Emulsion der einzusetzenden aktiven Aromastoffe (die zusammen die organoleptisch wirksame Menge eines Aromas ergeben) hergestellt wird.

Bevorzugt ist es, die diskreten Tropfen aus dem flüssigen Füllmaterial und der Lösung oder Dispersion des härtbaren Kapselmaterials herzustellen, indem die besagten Flüssigkeiten durch eine konzentrische Mehrdüsenanordnung geleitet werden. Die diskreten Tropfen umfassen dann zumindest zwei unterschiedliche Phasen (Füllmaterial, Kapselmaterial).

Das Härten des härtbaren Kapselmaterials erfolgt vorzugsweise, indem das härtbare Kapselmaterial, welches in den gebildeten diskreten Tropfen das flüssige Füllmaterial allseitig umschließt, mit einer wässrigen Lösung mehrwertiger Kationen (z.B. Ca-lonen) kontaktiert wird, woraufhin das saure Polysaccharid mit den Kationen reagiert, um eine nahtlose feste Hülle um das flüssige Füllmaterial zu bilden.

Nach dem Härten des härtbaren Kapselmaterials werden die gebildeten Kapseln üblicherweise von der eingesetzten mehrwertige Kationen enthaltenden Lösung abgetrennt, und zwar vorzugsweise nach einer nur sehr kurzen Kontaktzeit zwischen Kapsel- und Härtungsbad.

Das Trocknen der gebildeten Kapselhülle erfolgt vorzugsweise zumindest partiell durch einen Wasseradsorptions- oder -absorptionsprozess, der gegebenenfalls mit anderen Trocknungsprozessen kombiniert sein kann, z.B. mit einem konvektiven Lufttrocknungsprozess.

Vor dem Trocknen werden die vom Härtungsbad separierten Kapseln vorzugsweise noch gewaschen, um so etwaige anhaftende mehrwertige Kationen von der Kapseloberfläche zu entfernen.

Zu den bevorzugten Verfahrensgestaltungen folgen unten weitere Details.

Die vorliegende Erfindung betrifft auch Artikel, insbesondere Lebensmittelzusammensetzungen, die eine oder mehrere erfindungsgemäße mononuklear gefüllte Mikrokapseln und ein Trägermaterial für die Mikrokapsel (M) umfassen.

Es sind bereits mononuklear gefüllte Mikrokapseln bekannt, welche für den menschlichen Verzehr geeignet sind. Zu unterscheiden sind hierbei (a) Kapseln, die mittels Mehrfachdüsen-Technologie herstellbar sind, (b) Zellkapseln, (c) Koazervat-Mikrokapseln.

Zu Kapseltyp (a) verweisen wir insbesondere auf die obigen Ausführungen zu den Dokumenten JP 11155480 A und JP 09065853 A.

Hinsichtlich des Kapseltyps (b), d.h. der Zellkapseln, wird auf die Dokumente EP 242 135 A2 und EP 528 466 A1 verwiesen, die jeweils die Einkapselung von Wirkstoffen in aus Mikroorganismen stammenden Zellmaterial offenbaren.

Mit Blick auf Kapseltyp (c), d.h. Koazervat-Mikrokapseln, wird auf die Dokumente WO 93/19621 und WO 93/19622 verwiesen.

Die Kapseltypen (b) und (c) bzw. die entsprechenden Verfahren zu deren Herstellung besitzen gewisse Vorteile und gewisse Nachteile. Nachteiligerweise sind die üblichen Herstellungsverfahren für beide Kapseltypen immer noch Batch-Verfahren, so dass eine kostengünstige Kapsel-Massenfertigung nicht möglich ist. Die Bereitstellung von geeigneten Mikroorganismen-Zellen und die Einkapselung in solchen ist zudem technisch sehr anspruchsvoll und fehleranfällig, und die erhaltenen Zellkapseln sind zudem nicht sonderlich stabil gegenüber Scherkräften. Das Verfahren zur Herstellung von Koazervat-Mikrokapseln, welches üblicherweise unter Verwendung von Gelatine und einem Additiv wie z.B. Gummi Akazia durchgeführt wird, ist nur unter der Voraussetzung tauglich, dass das zu umhüllende Aromen-Füllmaterial in einer wässrigen Lösung der Gelatine komplett unlöslich ist, was zu einer entsprechend großen Einschränkung im Hinblick auf potentiell einzukapselnde komplexe Aromen führt. Gemäß den Dokumenten WO 93/19621 und WO 93/19622 sind die einzukapselnden aktiven Bestandteile auf öllösliche Komponenten beschränkt. Koazervat-Mikrokapseln sind zudem in der Regel nicht hitzestabil, was ihre Einsetzbarkeit weiterhin nachteilig beschränkt.

Um den enormen Aufwand aufzuzeigen, der in der Industrie betrieben wird, um die beschriebenen Nachteile der oben genannten Kapselsysteme auszugleichen und hitzestabile Wirkstoff-Freisetzungssysteme mit einer möglichst hohen Zahl potentiell einkapselbarer Aromen zu erzeugen, sei auf die folgenden Dokumente verwiesen:
US 5,759,599

Dieses Dokument offenbart ein Verfahren zur Aromatisierung und Herstellen von Lebensmitteln durch Zusatz mittels chemischer Vernetzung gehärteter und damit hitzestabiler, mit Aromaölen beladener Kapseln, die durch den Koazervationsprozeß auf der Basis eines Proteins als Schalenmaterial hergestellt und welche beim Kauen mechanisch aufgebrochen werden. Die Kapseln können wiederum nur mit öllöslichen Aromastoffen beladen werden.
WO 99/17871

Dieses Dokument offenbart ein Verfahren zur Einkapselung amphiphiler Aromen in chemisch vernetzte Koazervat-Mikrokapseln, welche aufgrund bekannter Verteilungskoeffizienten nachträglich von Außen in den Kern einer vorgefertigten unaromatisierten Kapsel transportiert und dort bis zu einem definierten Gleichgewicht gelöst werden.

Im Unterschied zu den bekannten Typen mononuklear gefüllter Kapseln sind die erfindungsgemäßen Mikrokapseln bei entsprechender Gestaltung des Herstellungsverfahrens scherkraftstabil, wasserunlöslich, aroma- und hitzestabil (Kapseln in Anwesenheit von Wasser nicht schmelzbar), ohne dass eine zusätzliche chemische Vernetzungsreaktion durchgeführt werden muss. Das erfindungsgemäße Herstellungsverfahren ist dabei bedeutend einfacher als die Herstellung von Zellkapseln oder Koazervat-Mikrokapseln und führt auch zu deutlich einheitlicheren Mikrokapsel-Produkten. Die erfindungsgemäßen Kapseln lassen sich in einem kontinuierlichen Prozess und mit im Wesentlichen konstanten Abmessungen herstellen. Im Vergleich mit den Mikrokapseln, die in den Dokumenten JP 11122480 A und JP 09065853 A beschrieben sind, zeichnen sich die erfindungsgemäßen Mikrokapseln insbesondere durch eine verbesserte Hitzestabilität und eine verbesserte Aroma-Retention aus.

Das gehärtete Kapsel(hüll)material der erfindungsgemäßen Mikrokapseln umfasst - wie bereits erwähnt - vorzugsweise eine durch Kontaktieren mit ein-, zwei- oder höherwertigen Kationen gehärtete Substanz. Im erfindungsgemäßen Verfahren wird daher bevorzugt eine entsprechende härtbare Substanz eingesetzt, die hierbei vorzugsweise in Form einer Lösung vorliegt. Bevorzugt sind Substanzen, die in Kontakt mit Ca-lonen aushärten, z.B. nach Eintropfen in ein Ca-lonen-haltiges Bad.

Das Kapsel(hüll)material für die Mikrokapseln ist vorteilhafter Weise aus der Gruppe ausgewählt, die aus Alginat, Pektat, Pektinat, Carrageenan, Gellan und deren Mischungen besteht. Die genannten Materialien sind durch Kationen härtbar und bilden im ausgehärteten Zustand besonders hitzestabile und wasserunlösliche Kapseln mit einer hohen Scherstabilität. Die zur Härtung der genannten Materialien geeigneten Kationen sind dem Fachmann bekannt.

Die erfindungsgemäßen mononuklear gefüllten nahtlosen Mikrokapseln umfassen in ihrem Füllmaterial eine organoleptisch wirksame Menge eines Aromas. Dieses Aroma umfasst vorzugsweise einen oder mehrere Aromastoffe im Sinne der EU-Aromenverordnung 88/388/EWG, d.h. eine oder mehrere geruchs- und geschmacksgebende Substanzen, die entweder in Lebensmitteln von Natur aus vorhanden sind (wie z.B. in Früchten) oder Lebensmitteln zugesetzt werden, um diesen einen ansprechenden Geruch und Geschmack zu verleihen.

Als besonders vorteilhaft ist festzuhalten, dass die erfindungsgemäß eingesetzten Aromen amphiphilen Charakter besitzen können und nicht nach Erzeugung der Kapselhülle von außen durch Diffusion in das Füllmaterial transportiert werden müssen.

Im Rahmen der vorliegenden Erfindung ist es regelmäßig wichtig, Maßnahmen zu ergreifen, die sicherstellen, dass bei der Herstellung keine inakzeptablen Mengen des Aromas aus dem Füllmaterial in die Kapselhülle und gegebenenfalls sogar aus dieser hinaus diffundieren. Derartige Maßnahmen sind z.B. das (schnelle) Abtrennen der Kapseln vom Härtungsbad, das Waschen der Kapseln und das Trocknen der Kapseln (siehe oben). Häufig umfassen die erfindungsgemäßen mononuklear gefüllten nahtlosen Mikrokapseln als Füllmaterial ein lipophiles Lösungsmittel (z.B. ein pflanzliches Öl), in dem ein Aroma gelöst ist. Bei der Herstellung der erfindungsgemäßen Mikrokapseln wird zudem regelmäßig eine wässrige Lösung eines härtbaren Kapselmaterials eingesetzt. Die Verteilung eines (z.B. amphiphilen) Aromastoffs zwischen dem Füll- und dem Kapselmaterial bei der Herstellung der erfindungsgemäßen Mikrokapseln lässt sich durch den entsprechenden Verteilungskoeffizienten beschreiben. Aus Gründen der Übersichtlichkeit ist es jedoch günstiger, anstelle der Verteilungskoeffizienten für das Konzentrationsgleichgewicht zwischen den Phasen Füllmaterial und Kapselmaterial den Verteilungskoeffizienten zwischen n-Octanol und Wasser anzugeben, welcher in der Literatur üblicherweise zur Charakterisierung von Stoffen eingesetzt wird. Bei gegebener Temperatur (z.B. T = 25 °C) ist das Verhältnis der Konzentrationen eines gegebenen Aromastoffs in den beiden Phasen n-Octanol und Wasser konstant; der Verteilungskoeffizient K_{o/w} ist eine Stoffkonstante, ebenso wie der dekadische Logarithmus des Verteilungskoeffizienten logK_{o/w} (auch als logP_{o/w} bezeichnet). Es gilt logK_{o/w} (= logP_{o/w}) = log₁₀[cₒ/c_{w}] mit cₒ = Konzentration eines Aromastoffs in n-Octanol; c_{w} = Konzentration desselben Aromastoffs in Wasser.

Für die Zwecke der vorliegenden Erfindung lassen sich die Aromastoffe in drei Gruppen einteilen, abhängig von ihrem logK_{o/w.} und zwar so, dass jeder Gruppe ein Schwierigkeitsgrad bei der Einkapselung des betreffenden Aromastoffs zugeordnet wird.

Aromastoffe mit einem logK_{o/w} ≥ 2 sind lipophile Verbindungen, die recht einfach einzukapseln sind. Eine erfindungsgemäße Mikrokapsel kann im Füllmaterial (Kern) mehr als 50 und bis zu 95 Gew.-% an Aromastoffen mit einem logK_{o/w} ≥2 umfassen, bezogen auf die Gesamtmasse der Kapsel. In diese erste Gruppe von Aromastoffen fallen Substanzen wie Carvone (log-K_{o/w} = 2,23), Gamma-Decalacton (logK_{o/w} = 2,42), Ethyl-Caproat (logK_{o/w} = 2,83), Linalool (logK_{o/w} = 3,28) und beta-Pinen (logK_{o/w}= 4,37).

Aromastoffe mit einem logK_{o/w} zwischen 1 und 2 lassen sich als amphiphile Verbindungen betrachten und sind bereits schwieriger einzukapseln. Eine erfindungsgemäße Mikrokapsel kann in ihrem Füllmaterial (Kern) zumindest 10 Gew.-% und bis zu 50 Gew.-% an Aromastoffen mit einem logK_{o/w} zwischen 1 und 2 umfassen, bezogen auf die Gesamtmasse der Kapsel. In diese zweite Gruppe von Aromastoffen fallen Substanzen wie Ethylbutyrat (logK_{o/w} = 1,77), Benzaldehyd (logK_{o/w} = 1,64), Isoamylalkohol (logK_{o/w} = 1,28), Ethylpropionat (logK_{o/w}= 1,24) und Diacetyl (logK_{o/w}= 1,33).

Aromastoffe mit einem logK_{o/w} ≤1 sind amphiphile bis hydrophile Substanzen und lassen sich besonders schwierig einkapseln. Eine erfindungsgemäße Mikrokapsel kann in ihrem Füllmaterial zumindest 1 Gew.-% und bis zu 10 Gew.-% an Aromastoffen mit einem logK_{o/w} ≤1 umfassen, bezogen auf die Gesamtmasse der Kapsel. In diese dritte Gruppe von Aromastoffen fallen Substanzen wie Ethyllactat (logK_{o/w} = 0,88), Anisaldehyd (logK_{o/w} = 0,95), Buttersäure (logK_{o/w}= 0,78), Ethylacetat (logK_{o/w}= 0,75).

Aus organoleptischen Gründen wird das im Füllmaterial einer erfindungsgemäßen Mikrokapsel z.B. in gelöster oder dispergierter Form enthaltene Aroma häufig zumindest 10 Gew.-%, bezogen auf die Gesamtmasse des Aromas im Füllmaterial, an einem oder mehreren Aromastoffen mit einem logK_{o/w} < 2 umfassen. Liegt das Aroma im Füllmaterial in gelöster Form vor, sollte allerdings der Anteil an Aromastoffen mit einem logK_{o/w} < 1 zur Vermeidung inakzeptabler Aromaverluste sehr gering gehalten werden und vorzugsweise nicht mehr als 1 Gew.-%, bezogen auf die Gesamtmasse des Aromas im Füllmaterial, betragen. Liegt das Aroma im Füllmaterial in dispergierter, beispielsweise emulgierter Form vor, so ist die Gefahr eines Übertritts von Aromastoffen in die Kapselhülle im Vergleich im einem gelösten Aroma reduziert, sodass auch ein oder mehrere Aromastoffe mit einem logP_{o/w} < 1,0 im Aroma enthalten sein können, z.B. in einem Bereich von 0,5 - 3,0 Gew.-% bezogen auf die Gesamtmasse des Aromas im Füllmaterial.

Mit dem erfindungsgemäßen Verfahren lassen sich mononuklear gefüllte Mikrokapseln erzeugen, welche einige oder sämtliche der nachfolgenden Eigenschaften in sich vereinigen:
1. Hohe Retention amphiphiler Wirkstoffkomponenten (insbesondere Aromastoffe) im Kern während der Härtung und Trocknung des Schalenmaterials bis zum fertigen Endprodukt;
2. Hohe Stabilität eingekapselter Wirkstoffkomponenten während der Lagerung.
3. Geringe Wechselwirkung zwischen Füllmaterial und Kapselmaterial;
4. Hohe thermische und/oder mechanische und/oder chemische Stabilität der Mikrokapsel gegenüber Bedingungen wie sie üblicherweise bei der Weiterverarbeitung von Mikrokapseln herrschen (z.B. Mischen, Braten, Backen oder Kochen).
5. Kontrollierte, dann aber schlagartige Freisetzung der im Füllmaterial enthaltenen Wirkstoffe bei bestimmungsgemäßer Endverwendung der Mikrokapsel, d.h. z.B. bei Verzehr eines Lebensmittels, welches mit Aromastoffen gefüllte Mikrokapseln umfasst.

Zur Herstellung des Füllmaterials (d.h. des Kerns der Mikrokapsel) wird - wie bereits erwähnt - häufig zunächst (a) eine Lösung des einzubringenden Aromastoffes in einem Öl oder (b) eine Wasser-in-Öl Emulsion, die in der inneren wässrigen Phase den Aromastoff umfasst, hergestellt. Der Begriff "Öl" umfasst dabei sowohl flüssige Pflanzenöle als auch schmelzbare pflanzliche oder tierische Fette. In der Regel wird es vorteilhaft sein, ein Öl auszuwählen, welches den einzuarbeitenden Aromastoff gut löst und gleichzeitig für die menschliche Ernährung geeignet ist. Bei Einsatz von Wasser-in-Öl-Emulsionen kann es vorteilhaft sein, der Ölphase Emulgatoren zuzusetzen, welche geeignet sind, die Emulsion zu stabilisieren. Durch Zusatz einer geringen Menge an Wasser, die vorzugsweise 10 Gew.-% (bezogen auf das flüssige Füllmaterial) nicht überschreitet und eines daran angepassten Emulgators mit einem HLB-Wert (Hydrophilic Lipophilic Balance) von vorzugsweise < 5 innerhalb des Füllmaterials (Kernsystems) ist es möglich, eine stabile Wasser-in-Öl-Emulsion herzustellen. Die Emulgatoren werden dabei vorzugsweise aus der Gruppe gewählt, die aus Monodiglyceriden, Monoglyceriden, Polyglycerolestern, Sorbitanestern und deren Mischungen besteht. Die Herstellung einer Wasser-in-Öl-(w/o)-Emulsion innerhalb des Füllmaterials (Kernphase) verbessert die Retention der wasserlöslichsten Aromastoffe. Der Emulgator kann auch ohne Zusatz von Wasser in der Ölphase in Lösung gebracht werden. Der Emulgator umfängt die wasserlöslicheren Aromastoffe-Komponenten innerhalb des flüssigen Füllmaterials in Form von Mizellen.

Bei Raumtemperatur feste Aromastoffe können in flüssigem Öl dispergiert werden, wobei ggf. Dispergier-Hilfsmittel zugesetzt werden.

Zur Herstellung der Lösung oder Dispersion eines härtbaren Kapselmaterials auf Basis eines sauren Polysaccharids wird im erfindungsgemäßen Verfahren üblicherweise das Polysaccharid-Material, z.B. das Natriumsalz der Alginsäure, in einem wässrigen Lösungsmittel gelöst oder dispergiert. Nicht flüchtige, wasserlösliche oder wasserunlösliche dispergierbare Stoffe können zu diesem Zeitpunkt zugesetzt werden, beispielsweise (a) Glyzerin, Propylenglykol oder sonstige Mittel zur Verbesserung der mechanischen Eigenschaften der herzustellenden (getrockneten) mononuklear gefüllten Mikrokapseln durch Plastifizierung der Kapsel (Schale) oder (b) Proteine und/oder Saccharide zur Modifizierung der Kapselzusammensetzung.

In einem bevorzugten erfindungsgemäßen Verfahren werden die Lösung oder Dispersion des härtbaren Kapselmaterials und das flüssige Füllmaterial getrennt voneinander einem System, vorzugsweise einem Mehrdüsensystem, zugeführt, wobei dieses System so ausgelegt ist, dass aus dem flüssigen Füllmaterial für die Mikrokapseln und der Lösung oder Dispersion des härtbaren Kapselmaterials für die Mikrokapseln diskrete Tropfen gebildet werden, in denen das härtbare Kapselmaterial das flüssige Füllmaterial umschließt. Geeignete Doppeldüsensysteme sind in der Literatur beschrieben, und es wird insoweit erneut auf die Dokumente EP 0 513 603 B1 und WO 93/02785 verwiesen.

Die besagten diskreten Tropfen bestehen aus einem inneren Aromakern (Füllmaterial), der von einer äußeren Polysaccharid-Hülle (Kapselhülle) allseitig umschlossen ist. Kern, Hülle und gesamte Kapsel sind vorzugsweise sphärisch. Die Kernphase ist vorzugsweise innerhalb der Kapselhüll-Phase exakt zentriert, was bedeutet, dass die Dicke der Kapselhülle an jedem Ort der nahtlosen Mikrokapsel gleich ist. Eine derartige Ausgestaltung trägt in hohem Maße zu einer qualitativ hochwertigen Kapsel bei. Die Zentrierung des Kapselkerns (Füllmaterial) lässt sich erreichen durch eine geeignete Auswahl der folgenden Parameter: Verhältnis des Durchmessers von innerer und äußerer Düse; Verhältnis der Durchflussraten durch die innere und die äußere Düse; Frequenz und Amplitude eines gegebenenfalls vorhandenen Vibrators für die Mehrfachdüse; intrinsische Eigenschaften der eingesetzten Flüssigkeiten (für Füllmaterial und Kapsel(hüll)material).

Zur Härtung der gebildeten diskreten Tropfen werden diese in eine vorzugsweise wässrige oder wässrig-alkoholische Lösung mehrwertigen Kationen eingeleitet oder eingetropft. Die Auswahl der mehrwertigen Kationen richtet sich nach der Art des eingesetzten härtbaren Kapselmaterials. Soweit Calcium-lonen zur Härtung eines eingesetzten sauren Polysaccharids verwendet werden können, umfasst die Lösung multivalenter Kationen vorzugsweise ein gelöstes Calciumsalz, wobei gelöstes Calciumchlorid mit einer Konzentration im Bereich zwischen 1 und 10 Gew.-% (bezogen auf die Gesamtmasse des flüssigen Härtungsbades) bevorzugt ist. Die Lösung mehrwertiger Kationen wird üblicherweise hergestellt, indem die entsprechenden Salze in entionisiertem oder in Leitungswasser aufgelöst werden, welches mit niedermolekularen Alkoholen wie Ethanol oder Isopropanol versetzt sein kann, (a) um die Oberflächenspannung der Lösung herabzusetzen und somit das Eintauchen der an der Düse erzeugten diskreten Tropfen zu erleichtern, (b) die Dichte der wässrigen Lösung des mehrwertige Kationen enthaltenden Salzes (z.B. Calciumsalzes) einzustellen, und/oder (c) die Gelierung des Kapselmaterials (z.B. Alginats) zu beeinflussen.

Alternativ zum Einleiten oder Eintropfen der diskreten Tropfen in eine Lösung mehrwertiger Kationen können die feinen Tropfen auch mit einer Lösung der mehrwertigen Kationen besprüht werden.

Als Kapselmaterial besonders geeignet sind Alginate, d.h. lineare Copolymere von -L-Guluronat (G) und -D-Mannuronat (M). Die Alginat-kette kann als ein Block-Copolymer angesehen werden, das aus "G-Blöcken" (homopolymere Regionen von Guluronsäure-Resten), "M-Blöcken" (homopolymere Regionen von Mannuronsäureresten) und "MG-Blöcken" (copolymere Regionen gemischter alternierender Sequenzen von M und G) von variabler Länge. Alginate weisen neben einer variablen chemischen Zusammensetzung auch eine breite Molekulargewichts-verteilung auf, so dass der Begriff Alginat ein Oberbegriff für eine ganze Familie von Polymeren ist. Die Eigenschaften eines jeweiligen Alginats erschließen sich aus dessen jeweiliger Blockstruktur und seinem Molekulargewicht.

Oberhalb eines kritischen Molekulargewichts werden die Eigenschaften eines Alginats im Wesentlichen durch dessen Monomeren-Zusammensetzung und Blockstruktur bedingt. Generell führt eine Erhöhung des Gehaltes an Guluronat zu einem mechanischen stabileren Gel mit erhöhter Stabilität in Anwesenheit von nicht- bzw. antigelierenden Ionen wie Natrium und Magnesium sowie Calcium-komplexierenden Verbindungen; Alginat-Gele mit einem hohen Guluronatanteil besitzen generell eine hohe Porosität und neigen während der Gelbildung nur in geringem Maße zur Synärese. Hingegen werden Alginat-Gele durch Erhöhung des Mannuronat-Anteils weicher und elastischer, und die entsprechenden Gele schrumpfen bei der Gelbildung stärker, was zu einer Verringerung der Porosität führt.

Für die Einkapselung von Wirkstoffen (insbesondere Aromastoffen) sind prinzipiell alle Alginattypen geeignet; jene mit einem Mannuronat-Anteil über 40% werden allerdings für die Herstellung erfindungsgemäßer Mikrokapseln zur Verwendung in Lebensmittelanwendungen bevorzugt, weil sie vergleichsweise elastisch sind und kleinere Poren ausbilden, was sich vorteilhaft auf die Aromaanwendung in der Hitze und damit die Aromaretention bei der Weiterverarbeitung auswirkt. Im Falle einer beabsichtigten kontinuierlichen Freisetzung eines Aromastoffs aus einer erfindungsgemäßen Kapsel unter Einwirkung von Hitze, Dampf oder Luft, d.h. Bedingungen wie sie häufig bei der Verwendung von Tabakerzeugnissen vorliegen, sind hingegen guluronatreiche Alginatgele mit großen Poren von Vorteil. Wegen ihrer vergleichsweise schnellen Gelierung werden für die Einkapselung von Aromastoffen hochmolekulare Alginate bevorzugt. Zur Modulierung der Viskosität eines Alginatgels kann es jedoch vorteilhaft sein, hochmolekulare Alginate teilsweise durch niedermolekulare Alginate zu substituieren; die Viskosität eines Alginatgels ist neben anderen Faktoren für die Größe der sich in dem erfindungsgemäßen Verfahren bildenden Mikrokapseln und für die Kapseldicke (Schalendicke) verantwortlich. Die Viskosität des Alginatgels hat zudem direkten Einfluss auf die Elastizität der gebildeten Kapsel.

Zum Härten (Gelieren) von Alginat sind Calciumionen bevorzugt, und zwar insbesondere wegen ihrer hohen Effektivität, der mit dem Einsatz verbundenen niedrigen Kosten und ihrer gesundheitlichen Unbedenklichkeit. Andere zweiwertige Metallionen wie die des Zink, Kupfers, usw. können ebenfalls verwendet werden, ebenso wie die Ionen des zwei- oder dreiwertigen Eisens, des Aluminiums, usw. Als Gegenion des Calciums ist das salzig und leicht bitter schmeckende Chlorid aus Kostengründen zu bevorzugen; Acetat und/oder Laktat sind jedoch aus geschmacklichen Gründen bevorzugt. Bei der Kontaktierung von diskreten Tropfen, die als härtbares Kapselmaterial Alginat umfassen, mit Calciumionen, bildet sich unverzüglich eine Haut aus unlöslichem Alginatgel. Im Anschluss hieran diffundieren Calciumionen langsam in die Kapselschale hinein. Für Tropfen mit einem Durchmesser von 100 bis 5000 Mikrometern und eine wässrige Lösung von 1 bis 10 Gew.-% Calciumchlorid liegt die optimale Kontaktzeit unter 1 Minute, sie kann aber im Einzelfall auch länger sein und z. B. 100 Minuten betragen. Enthält das Aroma wasserlösliche Bestandteile, ist es allerdings von Vorteil, die sich bildenden Kapseln bereits nach einer kurzen Zeit aus dem Calciumbad herauszunehmen, um einen Übertritt wasserlöslicher Verbindungen in das Bad zu verhindern oder zumindest in einem akzeptablen Rahmen zu halten. Es sei darauf hingewiesen, dass der Verlust an wasserlöslichen Aromabestandteilen aus einer Alginatkapsel deutlich langsamer abläuft als der Verlust entsprechender Aromabestandteile aus einer vergleichbaren Mikrokugel; diese Verluste bei Mikrokugeln werden im Dokument WO 98/15191 beschrieben. Die vorstehend für Calciumionen und Alginat angestellten Überlegungen und Bemerkungen treffen in entsprechender Weise für andere Paarungen aus einem sauren Polysaccharid und einem ein- oder mehrwertigen Kation zu.

Wenngleich vorstehend das Augenmerk insbesondere den verschiedenen Alginattypen und hierunter wiederum insbesondere dem Natriumalginat galt, können zur Herstellung erfindungsgemäßer Kapseln doch auch niedrigveresterte Pektine oder andere saure Polysaccharide eingesetzt werden, insbesondere um wasserunlösliche, hitzestabile Gelkapseln herzustellen.

Die Konzentration des sauren Polysaccharids (Hydrokolloids) in der flüssigen Mischung, aus der die Kapsel(hülle) hergestellt werden soll, liegt vorzugsweise im Bereich zwischen 0,5 und 4 Gew.-%, bezogen auf die Gesamtmasse der Lösung. Konzentriertere Lösungen sind in der Regel schwierig zu verarbeiten, da sie eine zu hohe Viskosität besitzen. Der Polysaccharid-Lösung können Additive wie z.B. Johannisbrotharz (locust bean gum), Saccharose, Glycerin oder Propylenglycol zugesetzt werden, um die mechanischen Eigenschaften des Kapsel(hüll)materials zu verbessern. Füllstoffe wie z.B. Oligosaccharide, Maltodextrin, Stärke, Gummi Arabicum oder Cellulosederivate (z.B. Carboxymethylcellulose) können in der Polysaccharid-Lösung gelöst oder in diese dispergiert werden, um die Barriereeigenschaften der Kapseln zu verbessern, indem sie die Poren ausfüllen, die in der offenen Struktur des später gebildeten Gels ansonsten vorhanden wären.

Die ausgehärteten oder in Aushärtung begriffenen Gelkapseln können aus der Suspension (Kapseln in ionenhaltiger Lösung) z.B. durch Filtration oder Zentrifugation abgetrennt werden. Es resultieren feuchte mononuklear gefüllte Mikrokapseln, die vorzugsweise mit einem Fließhilfsmittel (Anticaking-Mittel) versetzt werden können, um ein freifließendes Produkt zu erhalten. Das noch feuchte Produkt kann unter Atmosphärendruck oder reduziertem Druck getrocknet werden, um ein Kapselprodukt mit einem definiertem Wassergehalt zu erhalten. Auf diese Weise lässt sich auch die mechanische Stabilität der Mikrokapseln justieren.

Die erfindungsgemäßen Kapseln besitzen ein Volumen von bis zu 65 mm³, aber insbesondere im Bereich der Aromentechnologie sind deutlich kleinere Volumina bevorzugt. Bevorzugte Volumina liegen im Bereich zwischen 4 x 10⁻⁶ m³ und 2 x 10⁻⁹ m³; dem entsprechen bei einer exakt kugelförmigen Mikrokapsel Durchmesser zwischen ca. 200 und ca. 1500 µm. Vorzugsweise liegt das Volumen der erfindungsgemäßen mononuklear gefüllten Mikrokapsel im Bereich zwischen ca. 3 x 10⁻⁷ m³ und 3 x 10⁻⁵ m³; dies entspricht bei kugelförmigen Mikrokapseln einem Durchmesser im Bereich von ca. 400 bis ca. 1200 µm.

Das Füllmaterial der erfindungsgemäßen mononuklear gefüllten Mikrokapseln enthält Aromastoffe. Der Begriff Aromastoff umfasst dabei natürliche Aromastoffe, naturidentische Aromastoffe, künstliche Aromastoffe, A-romaextrakte, Reaktionsaromen und Raucharomen, gemäß EU-Aromenverordnung 88/388/EWG.
Eine Vielzahl von Aromen und Aromaingredienzen können mit dem erfindungsgemäßen Verfahren eingekapselt werden. Die Aromen schließen Verbindungen wie Menthol, natürliche Extrakte, Essenzen, komplexe Mischungen von Extrakten, essentielle (ätherische) Öle, Oleoresine oder rekonstituierte natürliche, naturidentische oder künstliche Aromen ein. Die Gruppe aus natürlichen Extrakten, Essenzen und Oleoresinen beinhaltet Fruchtessenzen, Vanilleextrakte, Paprika-Oleoresine, Pfefferoleoresine, Zimtöle, Öle des Wintergrün, Pfefferminzöl, Lorbeeröl, Thymianöl, Krauseminzeöl, Cassiaöl, Zitrusöle und ähnliche. Die Gruppe der rekonstituierten natürlichen, naturidentischen und künstlichen Aromen schließt Apfel-, Kirsche-, Erdbeere-, Pfirsich- sowie Wurst-, Käse-, Tomate-, Sellerie- und Butteraroma ein. Diese Aromen können einzeln oder als Mischung verwendet werden, entsprechend bekannter Verfahren. Abhängig von ihrem jeweiligen logK_{o/w}-Wert lassen sich die Aromen und Aromaingredienzien in unterschiedlich hoher maximaler Menge in die erfindungsgemäßen Kapseln einarbeiten (siehe die obigen Anmerkungen zum Schwierigkeitsgrad der Einkapselung in Abhängigkeit vom logK_{o/w}). Als besonders vorteilhaft ist es hervorzuheben, dass auch leicht flüchtige und amphiphile bzw. wasserlösliche Aromastoffe, die als Schlüsselverbindungen für die Rekonstituierung von frisch-fruchtigen und pflanzlichen Noten erforderlich sind, in ausreichend hoher Menge in die erfindungsgemäßen Kapseln eingearbeitet werden können und darin auch bei der Weiterverarbeitung der Kapseln zurückgehalten werden.

Erfindungsgemäße gefüllte Mikrokapseln, deren Füllmaterial einen oder mehrere Aromastoffe umfasst, sind zur Instant-Freisetzung dieses Aromastoffes durch mechanisches Öffnen der Polysaccharid-Kapsel geeignet. Während des Verzehrs stört dabei die Einkapselung nicht. Der Fachmann wird die Dicke und Festigkeit der Polysaccharid-Kapsel (Schale) den Erfordernissen des Einzelfalls entsprechend gestalten; er wird hierbei insbesondere ein geeignetes härtbares Kapselmaterial wählen und ggf. Plastifikatoren einsetzen. Auf diese Weise lassen sich beispielsweise erfindungsgemäße gefüllte Mikrokapseln herstellen, deren Füllmaterial einen oder mehrere Aromastoffe umfasst, und die z.B. in ein Lebensmittel inkorporiert werden können. Beim Kauen des Lebensmittels kommt es dann zu einer spontanen Freisetzung des Aromastoffs, wobei im Unterschied zu den aus dem Stand der Technik bekannten Verfahren zur Aromatisierung von Lebensmitteln keine oder nur vernachlässigbar geringe Mengen an Aromastoffen vom Material der Mikrokapsel zurückgehalten werden.

Die erfindungsgemäßen Mikrokapseln sind hitzestabil und/oder kochstabil und/oder frittierstabil eingestellt. Diese Begriffe haben dabei die jeweils oben angegebene Bedeutung und stellen klar, dass die erfindungsgemäßen Mikrokapseln im Vergleich mit den aus dem Stand der Technik bekannten Systemen für eine besonders gute Aroma-Retention in halbfesten oder festen Lebensmittelprodukten während des Kochens, Backens, Frittierens, Bratens, Trocknens, Extrudierens, Mikrowellenerhitzens, usw. sind. Die erfindungsgemäßen Mikrokapseln schützen die in ihnen enthaltenen Aromastoffe in heißen flüssigen Produkten gut gegen Abbau und Verflüchtigung, und zwar insbesondere während des Pasteurisierens und/oder Sterilisierens von Produkten, in die sie integriert sind.

Der Fachmann wird zwar prinzipiell in der Lage sein, die Komposition vieler Aromen insbesondere im Hinblick auf Komponenten amphiphiler oder hydrophiler Natur zu modifizieren bzw. dergestalt an das Kapselsystem anzupassen, dass akzeptable sensorische Ergebnisse erzielt werden. Um aber Wirkstoffverlusten der für das jeweilige Aroma charakteristischen amphiphilen oder hydrophilen Komponenten während der Härtung und Trocknung der Kapseln vorzubeugen, wird das erfindungsgemäße Verfahren unter Verwendung eines üblichen Düsensystems, wie es z.B. aus der EP 0 513 603 B1, der WO 93/02785 und den darin zitierten Dokumenten bekannt ist, vorteilhaft so gestaltet, dass (a) das härtbare Kapselmaterial erst an der Spitze der Düse mit der im Füllmaterial enthaltenen (Wirk)Substanz aus der Gruppe der Aromastoffe in Berührung kommt und (b) während bzw. nach dem Härten des härtbaren Kapselmaterials der oder die Aromastoffe nicht oder möglichst nicht in die das Füllmaterial umschließenden Kapsel eindiffundiert. Der Fachmann ist anhand von Versuchen in der Lage, geeignete Verfahrensparameter auf der Basis bekannter oder berechneter Verteilungskoeffizienten zu ermitteln, welche einen Übertritt von Aromastoffen in das Kapselmaterial und darüber hinaus in das Härtungsbad oder die Atmosphäre verhindern bzw. auf ein Minimum reduzieren.

Dem Fachmann ist es möglich, die Zusammensetzung des im Füllmaterial enthaltenen Aromas und dessen organoleptisches Profil zumindest im wesentlichen zu bewahren. Komponenten wie zum Beispiel Isoamylacetat (logP_{o/w} = 2,12), Ethylbutyrat (logP_{o/w} = 1,73) und Benzaldehyd (logP_{o/w} = 1,64), die amphiphiler Natur sind und deren Wasserlöslichkeit in dieser Reihenfolge deutlich zunimmt, stellen die jeweils charakteristischen bzw. typisierenden Komponenten für Banane-, Ananas- und Kirscharoma dar. Auf diese Aromen abgestimmte, schonende Herstellbedingungen ermöglichen es jedoch dem Fachmann, im Rahmen der Erfindung eine nahezu vollständige Erhaltung dieser Aromastoffe in den getrockneten erfindungsgemäßem Mikrokapseln zu gewährleisten.

Die Retention von Aromastoffen wie Isoamylalkohol, dessen logP_{o/w} von 1,22 eine erneute Erhöhung der Wasserlöslichkeit gegenüber den oben genannten drei Substanzen bedeutet, wird unter abgestimmten erfindungsgemäßen Prozessbedingungen zumindest im akzeptablen Rahmen gehalten, während nicht angepasste Herstellungsbedingungen praktisch zu quantitativen Verlusten führen würden.

Acetaldehyd, das für den Frischecharakter mancher Fruchtaromen verantwortlich ist, weist mit einem logP_{o/w} von -0,16 gegenüber Isoamylalkohol wiederum eine deutlich erhöhte Wasserlöslichkeit auf. Es kann deshalb bei der Härtung und Trocknung zu quantitativen Verlusten an diesem Aromastoff kommen, wenn er in gelöster Form im Füllmaterial enthalten ist.

Selbst die Retention gut wasserlöslicher Substanzen wie Acetaldehyd lässt sich jedoch durch geeignete Maßnahmen deutlich erhöhen, um auch insoweit sensorische Aktivität im Kern der Kapsel zurückzuhalten, z.B. durch Dispersion fester Aromastoffe oder einfacher Wasser-in-Öl Emulsionen, mizellare Systeme oder Liposome im Falle flüssiger Aromen.

Für Anwendungen, die die Hitzebeaufschlagung eines Endlebensmittels erfordern, sind erfindungsgemäße, auf ihrer Außenseite trockene, frei fließende Mikrokapseln mit einem Wasseranteil von ≤ 50 Gew.-% in der Kapselhülle, bezogen auf die Masse der Kapselhülle, gegenüber Kapseln mit einem Wasseranteil in der Kapselhülle von ≥ 50 Gew.-% bevorzugt. Aromastoffe können nämlich bei einem Wasseranteil von ≥ 50 Gew.-% in der Hitze mit dem dann aus überschüssigem, freiem Wasser entstehenden Wasserdampf aus einer Mikrokapsel entweichen. Trockene, z.B. durch Calcium gehärtete Kapseln mit einem Wassergehalt von ≤ 50 Gew.-% in der Kapselhülle, bezogen auf die Gesamtmasse der Kapselhülle, lassen sich nur schwer hydratisieren, sodass auch eine Hitzebeaufschlagung in Gegenwart von Wasser nicht sofort zu einer Zerstörung des Wirkstoff-Freisetzungssystems führt; dies ist bei erfindungsgemäßen Kapseln mit einem höheren Wasseranteil von beispielsweise ≥ 50 Gew.-% in der Kapselhülle in manchen Fällen anders, und auch die aus dem Stand der Technik bekannten Mikrovollkugeln, welche in eine Matrix eingebettete Aromen umfassen, sind in der Hitze in Gegenwart von Wasser weniger stabil als die bevorzugten erfindungsgemäßen Mikrokapseln, welche einen Wasseranteil von ≤ 50 Gew.-% in der Kapselhülle aufweisen; im Falle von Kapseln mit einem Füllmaterialanteil von 80 Gew.-% und einem Kapselhüllenanteil von 20 Gew.-%, jeweils bezogen auf die Gesamtmasse der Kapsel, entspricht dem ein Wasseranteil von unter 10 Gew.-%, bezogen auf die Gesamtmasse der Kapsel.

Gemäß einer bevorzugten Verfahrensausgestaltung werden zweiphasige diskrete Tropfen in ein Härtungsbad eingetropft, wobei der Aufprall der Tropfen soweit wie möglich gemildert wird, um nach Aushärtung des Kapsel(hüll)materials einen zentrierten Kern (aus Füllmaterial) zu gewährleisten. Der Fachmann wird hierzu den Abstand zwischen dem Mehrdüsensystem und dem Härtungsbad verringern und/oder in einem ersten Schritt die noch fallenden diskreten Tropfen mit der Härtungslösung besprühen, bevor die Tropfen dann in das Härtungsbad eintauchen und/oder die Amplitude und Frequenz eines üblicherweise dem Mehrdüsensystem zugeordneten Vibrators modifizieren und/oder die intrinsischen Eigenschaften von Kapselhüll- und flüssiger Kernphase adaptieren und/oder bestimmte Überlauf-Trichtersysteme oder Kanalsysteme verwenden und/oder im Härtungsbad tensioaktive Verbindungen einsetzen, die auf der Oberfläche des Härtungsbades einen Schaum erzeugen oder die Oberflächenspannung des Härtungsbades herabsetzen.

Die Polysaccharidlösung bildet im Kontakt mit den mehrwertigen Kationen sofort eine feste Haut um das Kernmaterial (Füllmaterial) herum. Danach diffundieren die Kationen langsam aus dem Härtungsbad (dem Härtungsspray) in das Innere der Kapselhülle hinein, so dass sich ein Aushärtungsgradient ausbildet, wobei auf der Außenseite der Kapselhülle eine vergleichsweise hohe Härte und auf der Innenseite der Kapselhülle eine vergleichsweise niedrige Härte besteht (siehe dazu auch unten). Der Fachmann wird anhand von Vorversuchen bestimmen, zu welchem Zeitpunkt des Aushärtungsprozesses die gelierten Mikrokapseln vom Aushärtungsbad abzutrennen sind.

Werden amphiphile Aromastoffe eingesetzt, ist zu erwarten, dass die hydrophileren Verbindungen innerhalb einer Aromastoffmischung diejenigen sein werden, die als erste aus der Kernphase (Füllmaterialphase) in die wässrige Polysaccharid-Lösung hineindiffundieren, während sich die diskreten Tropfen nach Austritt aus der Mehrfachdüse gerade bilden, und in einem zweiten Schritt durch das in Aushärtung begriffene Kapselhüllmaterial hindurch in Richtung auf das Aushärtungsbad diffundieren. Die Tropf- und Aushärtungsschritte werden deshalb im Rahmen der vorliegenden Erfindung vorzugsweise in jeweils kurzen Zeiträumen durchgeführt. Es ist bekannt, dass Polysaccharidlösungen auf Basis von Alginat, Gelan oder Pectin in Kontakt mit mehrwertigen Kationen wie z.B. Calcium eine inhomogene Struktur ausbilden. Die Kationen setzen sich anfänglich nur mit der äußeren Oberfläche der äußeren Polysaccharidphase der besagten diskreten Tropfen um und diffundieren anschließend zum Zentrum, wobei sie einen sogenannten Gelgradienten aufbauen. Die Kapselhüllstärke ist deshalb auf der äußeren Oberfläche der bereits gebildeten Mikrokapsel größer als innen, und im inneren Teil der Gelphase ist diese von flüssiger oder weicher Konsistenz. Die molekularen Ketten des aushärtenden Hydrokolloids kontrahieren, wobei gleichzeitig eine bestimmte Menge an Wasser aus dem Gel herausgepresst wird. Dieses Phänomen ist als Synärese-Effekt bekannt, und je kürzer die Gelierzeit ist, desto kleiner ist der Synärese-Effekt. Abhängig von Faktoren wie der Gelierzeit, der Polysaccharid-Lösungskonzentration und der Kationen-Lösungskonzentration kann die Synärese zwischen 5 Gew.-% und 60 Gew.-% ausmachen, bezogen auf die Masse der ursprünglichen flüssigen Tropfen. Eine bestimmte Menge hydrophiler Aromastoffe kann auf diese Weise (durch Synärese) durch den erzeugten Wassertransport in das Härtungsbad entweichen. Gemäß einer bevorzugten Ausgestaltung der vorliegenden Erfindung wird die Gelierzeit, d.h. die Kontaktzeit zwischen der gelbildenden Polysaccharidphase der Kapsel und dem Bad mit mehrwertigen Kationen, auf einen minimalen Wert reduziert, der vorzugsweise unter einer Minute liegt und insbesondere im Bereich zwischen 5 und 30 Sekunden liegen kann. Die Inhomogenität des gebildeten Gels und der reduzierte Synärese-Effekt beschränken die Migration der besagten hydrophileren Aromastoffe aus der Kernphase (Füllmaterial) durch die besagte Gelphase hindurch in das Härtungsbad. Dies ist ein wichtiger Unterscheidungspunkt im Vergleich mit den weiter oben beschriebenen Mikrokapseln, die durch Koazervation erzeugt werden und bei denen die Kontaktzeit zwischen den sich bildenden Mikrokapseln und dem wässrigen Reaktionsbad Stunden oder gar Tage beträgt.

Die Isolierung der gebildeten Mikrokapseln aus dem Härtungsbad wird vorzugsweise kontinuierlich durchgeführt, und zwar bevorzugt mittels einer Siebtechnik oder durch Zentrifugation. Zum Zeitpunkt der Abtrennung vom Härtungsbad liegen die Mikrokapseln in nasser Form vor. Der Wassergehalt der feuchten Mikrokapseln liegt zwischen 50 und 90 Gew.-%, bezogen auf die Gesamtmasse der Partikel. Das vorhandene Wasser liegt sowohl als an Polysaccharid gebundenes Wasser als auch als freies Wasser innerhalb der porösen Struktur des Polysaccharidgels und als interstitielles Wasser zwischen den gebildeten Mikrokapseln vor. Das Wasser enthält noch immer eine nicht vernachlässigbare Konzentration mehrwertiger Kationen. Gemäß einer bevorzugten Ausgestaltung wird nach der Abtrennung der feuchten (nassen) Mikrokapseln von der Lösung mehrwertiger Kationen (Härtungsbad) ein Waschschritt durchgeführt. Hierzu wird eine Waschlösung eingesetzt, die vorzugsweise aus entionisiertem Wasser besteht, aber auch aus einer Mischung aus Wasser und einem organischen Lösungsmittel wie z.B. Ethanol oder Isopropanol bestehen kann. Der Waschschritt wird vorzugsweise in den Abtrennschritt integriert, in dem eine Sprühdüse zum Applizieren einer Waschlösung in die zum Abtrennen eingesetzte Abtrennvorrichtung eingebaut wird. Auf diese Weise werden die mehrwertigen lonen, die noch in interstitiellem Wasser der Mikrokapseln und in dem äußeren Teil des Polysaccharidgels vorhanden sind, sehr schnell ausgewaschen. Dies verhindert eine weitere Diffusion der reaktiven mehrwertigen Kationen in das Polysaccharidgel hinein und verhindert deshalb auch einen weiteren Synärese-Effekt. Mikrokapseln, die einem Verfahren mit einer kurzen Gelierzeit unterzogen werden, können immerhin bis zu 50 Gew.-% aufgrund des Synärese-Effektes verlieren, falls die Mikrokapseln nach Abtrennung vom Härtungsbad ungewaschen stehen gelassen werden.

Aufgrund der Tendenz der hydrophileren Aromastoffe, aus der inneren Phase (Kern; Füllmaterial) der feuchten Mikrokapsel durch die poröse Polysaccharid-Gelstruktur des Kapsel(hüll)materials hindurch auszutreten, werden in bevorzugten Ausgestaltungen der vorliegenden Erfindung die noch feuchten Mikrokapseln so schnell wie möglich in die trockene Form überführt. Der Trocknungsprozess führt dazu, dass die poröse Hüllstruktur der Mikrokapsel weiter kontrahiert bis zu einem Punkt, an dem auch die hydrophileren Aromastoffe kaum noch durch die getrocknete Kapselhüll-Matrix hindurch diffundieren. Die Trocknung kann entweder im Batch oder kontinuierlich durchgeführt werden, wobei allerdings eine kontinuierliche Verfahrensgestaltung bevorzugt wird, um so den Zeitraum zwischen dem vorstehend beschriebenen Waschen der feuchten Mikrokapseln und dem Trocknungs-Verfahrensschritt soweit wie möglich zu verkürzen. Jede Standzeit der feuchten Mikrokapseln könnte zu einer weiteren Synärese führen und damit zu einem weiteren Transport hydrophiler Aromastoffe aus der Mikrokapsel heraus.

Im Rahmen der vorliegenden Erfindung können die üblichen Trocknungsverfahren angewandt werden, z.B. unter Verwendung konduktiver Trockner (wie Standardöfen oder Vakuumöfen) oder konvektiver Trockner (z.B. Wirbelschicht-Trockner oder rotierende Trockner). Diese Technologien sind jedoch vorzugsweise dann geeignet, wenn vornehmlich oder sogar nahezu ausschließlich lipophile und nicht-flüchtige Aromastoffe im Füllmaterial (Kern) enthalten sind. Wenn hingegen wasserlösliche oder leicht flüchtige Aromastoffe eingekapselt werden sollen, wird ein wichtiger Anteil dieser Stoffe bei einer einfachen Wasserverdampfung mit verdampfen, ein Effekt, der insbesondere beim konvektiven Trocknungsprozess kritisch ist, bei dem ein besonders hoher Anteil von Aromastoffen aus dem Füllmaterial entfernt wird, da verdampfbare Stoffe kontinuierlich mittels eines Luftstroms abtransportiert werden. In einer bevorzugten Ausgestaltung der vorliegenden Erfindung werden die genannten Trocknungstechnologien in einem Vortrocknungsschritt eingesetzt, in dem der Wassergehalt des Kapselhüllmaterials noch hoch bleibt und somit die Mitverdampfung hydrophiler Aromastoffe tolerabel bleibt. Nasse Mikrokapseln besitzen häufig einen Wassergehalt, der zwischen 96 Gew.-% und 65 Gew.-% liegt, bezogen auf die Gesamtmasse des Kapselhüllmaterials. Mit der Vortrocknung wird vorzugsweise weniger als 25 % des insgesamt zu entfernenden Wassers verdampft. Auf solche Weise werden Aromastoffe mit einem logK_{o/w}< 2, insbesondere logK_{o/w}< 1,5 besonders effektiv eingekapselt.

Gemäß einer weiteren alternativen Ausgestaltung der vorliegenden Erfindung wird eine Trocknungstechnologie eingesetzt, bei der die vorzugsweise gewaschenen feuchten Mikrokapseln oder die besagten vorgetrockneten Mikrokapseln mit einer wasseradsorbierenden oder wasserbindenden Substanz kontaktiert werden. Als wasseradsorbierende oder wasserbindende Substanz wird vorzugsweise ein anorganisches Salz wie z.B. Magnesiumcarbonat, Magnesiumsulfat, Calciumchlorid eingesetzt, oder Verbindungen wie Siliziumdioxid, Zeolith oder Stärke. Bevorzugt wird in vielen Fällen ein Siliziumdioxid, welches vorzugsweise eine innere spezifische Oberfläche von 150 m²/g oder mehr besitzt. Die Wasseraufnahmekapazität eines solchen Siliziumdioxids (auch Silica genannt) sollte über 100 % und vorzugsweise über 200 % liegen, bezogen auf seine eigene Masse. Zunächst werden die noch feuchten oder vorgetrockneten Mikrokapseln üblicherweise mit bis zu 50 Gew.-% und vorzugsweise ca. 25 Gew.-% des besagten Silica homogen vermischt. Zum Mischen kann dabei ein Trommelmischer, Spiralmischer, Paddle-Mischer oder Pflugscharmischer eingesetzt werden. Nach einer Vermischungszeit, die 10 min. nicht überschreiten und vorzugsweise ca. 5 min. betragen sollte, werden die Mikrokapseln mittels einer Siebtechnologie von der beladenen wasseradsorbierenden oder - bindenden Substanz abgetrennt. Hierzu können vibrierende oder rotierende Siebe eingesetzt werden. Das Vermischen und Sieben kann entweder im Batch oder als kontinuierlicher Vorgang durchgeführt werden. Das Kapselhüllmaterial der getrockneten Mikrokapseln besitzt einen Wassergehalt von maximal 50 Gew.-%, bezogen auf die Masse der Kapselhülle. Die Vorteile eines solchen Trocknungsprozesses im Vergleich mit den oben angegebenen Standard-Trocknungstechnologien sind insbesondere in (a) einer kürzeren Verfahrenszeit, (b) der Abwesenheit einer Duftstoffabgabe in die Luft, (c) der guten Fließfähigkeit der getrockneten Mikrokapseln sogar bei hoher Aromabeladung und insbesondere (d) in den Verbesserungen hinsichtlich der wasserlöslichen und flüchtigen Aromastoffanteile zu sehen. Aromastoffe mit einem logK_{o/w} < 2 und insbesondere logK_{o/w} < 1,5 werden deutlich besser eingekapselt als bei Anwendung der konventionellen Trocknungstechnologien. Die Verbesserung hinsichtlich der Retention kann hierbei 50 bis 90 Gew.-% ausmachen bezogen auf die Ausgangsmasse eingesetzter Aromakomponenten im Füllmaterial, vgl. Beispiel 10.

Die erfindungsgemäßem Mikrokapseln besitzen einen Wasseranteil in der Kapselhülle von ≤50 Gew.-%, bezogen auf die Gesamtmasse der Kapselhülle. Ein wesentlicher Grund hierfür ist, dass eigene Untersuchungen gezeigt haben, dass Mikrokapseln mit einem höheren Wasseranteil in der Kapselhülle einen inakzeptabel hohen Anteil ihrer leichter flüchtigen und ihrer wasserlöslichen Aromastoffe verlieren, wenn sie innerhalb einer Nahrungsmittelmatrix erhitzt werden. Die wasserlöslicheren und flüchtigeren Verbindungen werden dann nämlich von evaporierendem Wasser mitgerissen und aus der Mikrokapsel heraustransportiert, so dass von einer Co-Destillation gesprochen werden kann. Die Wärmestabilität der erfindungsgemäßen Mikrokapseln mit einem Wassergehalt von ≤50 Gew.-% in der Kapselhülle basiert nicht alleine auf ihrer physikalischen Integrität aufgrund ihrer Wasserunlöslichkeit und ihrer irreversiblen Gelbildung. Sie beruht auch und nicht zuletzt darauf, dass das Aromaprofil des ursprünglich eingekapselten Aromasystems in unveränderter Form konserviert wird. Eine erfindungsgemäße Mikrokapsel mit einem Füllmaterial, das einen Anteil von zumindest 80 Gew.-% ausmacht, bezogen auf die Gesamtmasse der getrockneten Kapsel, und dessen Kapselhüllmaterial dementsprechend einen Anteil von höchstens 20 Gew.-% ausmacht, sollte üblicherweise einen Wassergehalt von nicht mehr als 10 Gew.-% besitzen, wiederum bezogen auf die Gesamtmasse der getrockneten Mikrokapseln. Bei einem Füllmaterial-Anteil von 90 Gew.-% sollte der Wassergehalt nicht über 5 Gew.-% liegen.

Die Erfindung wird nachfolgend anhand von Beispielen näher erläutert.

### Beispiel 1

Herstellungsverfahren für erfindungsgemäße (Standard-)Kapseln zur Anwendung in den Beispielen 2 bis 5.

Natriumalginat (Typ Protonal LF20/60, FMC BioPolymer, Drammen, Norwegen) wurde in entmineralisiertem Wasser unter Rühren gelöst (15,0 g Alginat auf 1000 mL Wasser), bis eine klare Lösung entstand. Die Rührzeit bei einer Wassertemperatur von 8 - 15 °C betrug ca. 30 Minuten. Die Lösung wurde mindestens 3 - 5 Stunden vor der Verarbeitung angesetzt, um die gewünschte Viskosität von max. 200 mPa·s zu erhalten, besser noch am Vortag. Lösungen die älter als 24 Stunden waren, wurden nicht mehr verwendet. Nach dem Rührvorgang wurde der pH-Wert der Lösung gemessen werden und gegebenenfalls auf pH 6,5-7,5 mit Lauge eingestellt. Tank A wurde mit dieser Lösung befüllt.

Ein ausgewähltes Aromen-Konzentrat oder eine Essenz wurde mit Neutralöl (z.B. Miglyol, CONDEA Chemie GmbH, Witten, Deutschland) oder einem handelsüblichen pflanzlichen Öl (z.B. Sojaöl) zur Herstellung einer Lösung oder Dispersion bis zu einem definierten Verdünnungsgrad versetzt; diese verdünnte Aromenlösung wurde in Tank B gefüllt und zur Vermeidung von Entmischung kontinuierlich gerührt. Beide Lösungen wurden separat über Druckleitungen zu einem üblichen in Resonanz befindlichen Doppeldüsensystem gepumpt, wobei die Aromenlösung in die Innendüse mit einem Durchmesser von 200 Mikrometer, die Alginatlösung in die Außendüse mit einem Durchmesser von 1000 Mikrometer gelangte. Das Flussratenverhältnis der beiden Lösungen wurde durch separate Druckeinstellung derart gesteuert, dass ein Verhältnis der Flüssigkeiten A : B von 10 : 1 erreicht wurde.

Standardparameter:
Innendüse 0,3 bar / Durchfluss 14,0 = 330g Aroma pro Stunde
Aussendüse 0,5 bar / Durchfluss 20,0 = 3300g Alginat pro Stunde
Frequenz= 160 Hz, Amplitude= 4,8

Damit wurde ein zweiphasiger Flüssigkeitstropfen mit einem mittleren Teilchendurchmesser von ca. 2,2 mm erhalten mit einem Gewichtsverhältnis von Schale zu Kern von 10 : 1. Durch Gelierung mit 10%iger Calciumchlorid-Lösung wird dieser Tropfen während 5 Minuten geliert (Lösung von 10 g wasserfreiem Calciumchlorid in 100g entmineralisiertem Wasser).

Durch Synärese während des Gelierens des Alginats erhält man eine feuchte Kapsel mit einem Durchmesser von ca. 1,6 mm bei gleichbleibendem Aromakerndurchmesser. Die Partikel wurden durch Filtration isoliert und zur Entfernung überschüssiger Calciumionen mit Leitungswasser kurz gewaschen. Die filtrierten und gewaschenen Partikel wurden im Wirbelbett bei einer Lufttemperatur von 50 °C und einer Luftmenge von 10 m³/min getrocknet, wobei sich der mittlere Teilchendurchmesser der mittels dieser Standard-Trocknungsmethode getrockneten Partikel auf 1050 Mikrometer verringerte. Zur Unterstützung der Fluidisierung der nassen und bisweilen auch klebrigen Kapseln wurde als Fliesshilfsmittel 1 % Magnesiumcarbonat zugesetzt. Der mittlere Partikeldurchmesser, der am einfachsten durch lichtmikroskopische Vermessung einer für statistische Zwecke ausreichenden Zahl an Kapseln bestimmt wurde, wies ein modale Verteilung auf, der Kapseldurchmesser wurde zu 1050 ± 100 Mikrometer bestimmt. Alternativ wurde eine LASER-Beugungsmethode (Malvern) zur Partikelgrößen- und Partikelverteilungsmessung eingesetzt.

Die resultierenden trockenen Standard-Kapseln wiesen im Mittel einen Kernanteil von 80 Gew.-% und einen Schalenanteil von 20 % auf, wobei die Schale einen mittleren Restwassergehalt von 50 % zeigte, wie Trocknungsversuche mittels Halogentrockner ergaben.

Die Verdünnung des Aromenkonzentrats mittels Öl im Kern der Kapsel wurde so gewählt, dass in Vergleichsversuchen unter Verwendung einer Aromatisierung mittels (a) des entsprechenden flüssigen Aromenkonzentrats oder (b) einer sprühgetrockneten Form in Anwendung jeweils die gleichen Massenanteile an Aroma eingesetzt wurden. Dabei wurde darauf geachtet, dass bei der Aromatisierung mit Kapseln je nach Anwendung und erwünschter Freisetzungsrate eine Dosierung zwischen 0,2 und 2,0 Gewichtsprozent Kapseln bezogen auf die Endanwendung eingestellt wurde, um zu einem einheitlichen Bild zu gelangen. Die (Vergleichs)Aromatisierung mittels flüssigem Aromenkonzentrat erfolgte dementsprechend auf der Basis der eingestellten Verdünnung des entsprechenden Aromenkonzentrats im Kapselkern und der zusätzlichen Verdünnung durch Verkapselung des Schalenanteils aus partiell getrocknetem Alginatgel. Bei der Verwendung unterschiedlicher Kapselgrößen wurde der veränderten Verdünnung und Dosierung entsprechend Rechnung getragen.

Derart hergestellte Kapseln wurden in den nachfolgenden Beispielen eingesetzt.

### Beispiel 2

Kaugummi wurde nach folgender Rezeptur hergestellt.

Rezept Typ: Kaugummi, zuckerfrei

**Tabelle 1:**

| Kaumasse: | | |
|---|---|---|
| Zutat | Rohmaterial/Ingredienz | Gew.-% |
| 01 | Kaubase | 27,62 |
| 02 | Xylit | 9,87 |
| 03 | Sorbit | 48,59 |
| 04 | Mannit | 11,54 |
| 05 | Glycerin | 2,16 |
| 06 | Aspartam | 0,11 |
| 07 | Acesulfam K | 0,11 |
| | | 100,0 |

| | Aromatisierung: | Gew.-% (bezogen auf die Gesamtmasse der Kaumasse) |
|---|---|---|
| 08a | Kapseln - Pfefferminzöl | 1,0* |
| 08b | Kapseln - Pfefferminzöl | 2,0** |
| 08c | Pfefferminzöl | 0,64 |

| | | |
|---|---|---|
| * entspricht einem Pfefferminzöl-Anteil von 0,64% bei einer eingestellten mittleren Kapselgröße von 1050 Mikrometer und einer Aromenverdünnung mittels Öl von 80:20. ** entspricht einem Pfefferminzöl-Anteil von 0,64% bei einer eingestellten mittleren Kapselgröße von 800 Mikrometer und einer Aromenverdünnung mittels Öl von 80 : 20. | | |

### Produktionsmethode

a - Mischen von 1, 2, 3, 4, 5, 6, 7.
b - Kneten der Masse bei einer Temperatur von 50 °C, bis Mischung homogen.
c - Zugabe des Aromas (0,64 % Ingredienz 08c bzw. 1,0 % Ingredienz 08a bzw. 2,0 % Ingredienz 08b) bezogen auf Kaumasse) (Gesamtmasse der Ingredienzien 1 bis 7)
d - Laminieren der Masse
e - Schneiden in Streifen

Die Kaugummistreifen wurden im Geruch (Aroma durch Schnüffeln) und Geschmack (Kaugummi im Mund) bewertet. Das in Tabelle 2 zusammengefasste Resultat der organoleptischen Untersuchung (6 Testpersonen) zeigte, dass das eingekapselte Aroma beider Kapselgrößen gegenüber dem flüssigen Aroma bei gleichem Massenanteil eine deutlich erhöhte Intensität aufwies.

**Tabelle 2:**

| | Partikel | Intensität des Aroma | |
|---|---|---|---|
| | Größe (mm) | Nase | Mund |
| Alginatkapseln (Zutat 08a) | 1,050 | 5.25 | 7.00 |
| Alginatkapseln (Zutat 08b) | 0,800 | 6.38 | 8.40 |
| Nichteingekapselt (Zutat 08c) | | 4.50 | 4.70 |

### Organoleptische Bewertung (Aromastärke/Intensität):

0 = nicht wahrnehmbar, 1 = nahezu unbemerkbar, 2 = sehr schwach, Aroma Typ kaum erkennbar; 3 = schwach, Aroma Typ gerade erkennbar; 4 = schwach, Aroma Typ eindeutig erkennbar, 5 = akzeptabel, leicht zu schwach; 6 = akzeptabel, optimale Aromastärke ; 7 = akzeptabel, leicht zu stark; 8 = Aroma viel zu stark; 9 = Aroma extrem stark, irritierend

### Beispiel 3 (Backen)

Biscuits (Cracker) wurden nach folgender Rezeptur hergestellt.

Rezept Typ: Snack Biskuit, Käse, gesalzen

**Tabelle 3:**

| Zutat | Rohmaterial/Ingredienz | Gew.-% |
|---|---|---|
| 01 | Weizenmehl (Typ Cracker) | 66,530 |
| 02 | pflanzliches Shortening | 7,980 |
| 03 | Rohrzucker | 1,550 |
| 04 | Invertzucker Sirup | 1,550 |
| 05 | Salz | 1,150 |
| 06 | Ammonium Bicarbonat | 0,890 |
| 07 | Malzsirupextract | 0,806 |
| 08 | Natriummonophosphat | 0,665 |
| 09 | Natrium Bicarbonat | 0,550 |
| 10 | Zitronensäure | 0,066 |
| 11 | Bakterielle Protease | 0,027 |
| 12 | Natrium Metabisulfit | 0,016 |
| 13 | Wasser | 19,370 |
| | | 100,0 |

| | Aromatisierung: | Gew.-% (bezogen auf die Gesamtmasse der Zutaten 1-13) |
|---|---|---|
| 14a | Kapseln - Käse Aroma | 1,0* |
| 14b | Kapseln - Käse Aroma | 2,0** |
| 14c | Käse Aroma, Topnote, flüssig | 0,08 |

| | | |
|---|---|---|
| * entspricht einem Käsetopnoten-Anteil von 0,08 % bei einer eingestellten mittleren Kapselgröße von 1100 Mikrometer und einer Aromenverdünnung mittels Öl im Kern von 10:90 ** entspricht einem Käsetopnoten-Anteil von 0,08 % bei einer eingestellten mittleren Kapselgröße von 900 Mikrometer und einer Aromenverdünnung mittels Öl im Kern von 10 : 90. | | |

### Herstellungsmethode

a - Mischen von 2,3,4,5, und 13 (70 °C), bis alle Bestandteile gelöst sind.
b - Zugabe der Ingredienzen 1 und 6-12 zum Teig, Zugabe des Aromas 14a bzw. 14b bzw. 14c.
c - Mischen für ungefähr 10 Minuten, bis der Teig glatt ist
d - Lagern des Teiges für 2 Stunden.
e - Laminieren des Teigs und Zuschnitt.
f - Zugabe von granuliertem Salz auf den Biskuit-Teig (optional)
g - Backen für 4 Minuten im Ofen bei 185 °C (zu Anfang sollte die Temperatur 210 °C sein). Injektion von Dampf während die Biskuits in den Ofen gegeben werden, die Injektion solange durchführen bis die Temperatur 190 °C erreicht.
h - Beim Herausnehmen der Biskuits Pflanzenfett auf die Biskuits sprühen (optional), bis die Biskuits eine bestimmten Glanz bekommen.

Die Cracker wurden im Geruch (Aroma durch Schnüffeln) und Geschmack (Cracker im Mund) bewertet. Das in Tabelle 4 zusammengefasste Resultat der organoleptischen Untersuchung (7 Testpersonen) zeigte, dass das eingekapselte Aroma beider Kapselgrößen gegenüber dem flüssigen Aroma bei gleichem Massenanteil eine deutlich erhöhte Intensität aufwies.

**Tabelle 4:**

| | Partikel | Intensität des Aromas | |
|---|---|---|---|
| | Größe (mm) | Nase | Mund |
| Alginatkapseln (Zutat 14a) | 1,100 | 5.40 | 7.00 |
| Alginatkapseln (Zutat 14b) | 0,900 | 5.80 | 8.40 |
| Nicht eingekapselt (Zutat 14c) | | 4.50 | 3.88 |

### Organoleptische Bewertung:

0 = nicht wahrnehmbar, 1 = nahezu unbemerkbar, 2 = sehr schwach, 3 =schwach, Aroma Typ gerade erkennbar; 4 = schwach, Aroma Typ eindeutig erkennbar, 5 = akzeptabel, leicht zu schwach; 6 = akzeptabel, optimale Aromastärke ; 7 = akzeptabel, leicht zu stark; 8 = Aroma viel zu stark; 9 = Aroma extrem stark, irritierend

### Beispiel 4 (Frittieren)

Eine Panade wurde gemäss folgender Rezeptur hergestellt.

Rezept Typ: Nasspanade

**Tabelle 5:**

| Zutat | Ingredienzen | Gew.-% |
|---|---|---|
| 01 | Putenbrust in Stücken, ca. 15g | 76,0 |
| 02 | Salz | 1,00 |
| 03 | Nasspanada, BAB 137* | 5,80 |
| 04 | Wasser | 10,2 |
| 05 | Trockenpanade, Panko 102* | 7,00 |
| | | 100,0 |

| | Aromatisierung: | Gew.-% (bezogen auf die Gesamtmasse der Zutaten 1-5) |
|---|---|---|
| 06a | Aroma, Karotte, flüssig | 0,16 |
| 06b | Aroma, Karotte, Kapseln | 1,0** |

| | | |
|---|---|---|
| ** entspricht einem Karottenaroma-Anteil von 0,16% bei einer Kapselgröße von 1050 Mikrometer und einer Aromenverdünnung mittels Öl im Kern von 20:80. * Griffith Laboratories, B-2200 Herentals | | |

### Herstellmethode

a - Nasspanade (03) und Salz (02) in Wasser dispergieren, quellen lassen
b - Aroma (06a oder 06b) der in a) beschriebenen gequollenen Nasspanade dispergierten
c - Fleisch in die aromatisierte Nasspanade geben.
d - Abtropfen und in Trockenpanade (05) wälzen
e - Frittieren der panierten Fleischstücke in Pflanzenfett, ca. 180 °C, ca. 4 Min.

Die frittierten Putenbruststücke wurden im Geruch (Aroma durch Abriechen) und Geschmack verkostet.

**Tabelle 6:**

| Anwendung: Chicken Nuggets | | | | | |
|---|---|---|---|---|---|
| Aroma: Karotte | | | | | |
| | | | | | |

| # | Aroma-Form | Geschmacksprofil | | | Dosierung In Gew.-% |
|---|---|---|---|---|---|
| | | Profil 1 | Profil 2 | Profil 3 | |
| 06a | Flüssigaroma | Schwach Karotte | Leicht gemüsig | Schwach grün | 0,16 |
| 06b | Kapseln | Typisch Karotte | Süßlich | Gemüsig | 1,0 |

### Beispiel 5 (Dämpfen, Frittieren)

Die Nudeln wurde gemäß folgender Rezeptur hergestellt.

Rezept Typ: Instant, asiatisch,

**Tabelle 7:**

| Zutat | Ingredienzen | Gramm |
|---|---|---|
| 01 | Weizenmehl | 1000 |
| 02 | Wasser | 250 |
| 03 | Salz | 13 |
| 04 | MSG | 1,2 |
| 05 | Kansui*** | 1,2 |
| 06 | Guar Gummi | 0,4 |
| | | 1265,8 |

| | Aromatisierung: | Gew.-% (bezogen auf die Gesamtmasse der Ingredienzien 1-6) |
|---|---|---|
| 07a | Laucharoma, Kapseln | 1,0%* |
| 07b | Laucharoma, Kugeln | 1,0%** |
| 07c | Laucharoma, sprühgetrocknetes Produkt (20 Teile Aroma, 80 Teile Maltodextrin/Gummi arabicum) | 0,25% |
| 05a | Kaliumcarbonat | 0,96 |
| 05b | Natriumcarbonat | 0,12 |
| 05c | Natriumpolyphosphat | 0,12 |

| | | |
|---|---|---|
| * entspricht einem Laucharoma-Anteil von 0,05 % - entsprechend 0,25 % des entsprechenden sprühgetrockneten Produktes -, bei einer eingestellten Kapselgröße von 1050 Mikrometer und einer Aromenverdünnung mittels Öl im Kern von 5 : 95 %. ** entspricht einem Laucharoma-Anteil von 0,05 % - entsprechend 0,25 % des entsprechenden sprühgetrockneten Produktes -, bei einer eingestellten Kugelgröße von 500 Mikrometer und einem eingebetteten Aromagehalt von 5 %. ** alkalische Lösung (gibt den Nudeln einen frischen, leicht beißenden, säuerlichen Geschmack) bestehend aus: | | |

### Herstellungsmethode

a -Mischen und Pressen: Ingredienzien 01-07 werden in einem Teigkneter vermengt. Es entsteht eine krümelige Masse, die auf einer Platte mit einem Nudelholz zusammengepresst wird.
b -5 Minuten ruhen lassen
c -Teigausrollen: Teigplatte wird in einer Haushaltsnudelmaschine zwischen zwei Walzen immer dünner ausgewalzt, max. 1,1 mm.
d -Schneiden der Nudeln (die ausgewalzte Teigplatte wird zwischen zwei geriffelten Walzen auf ein Lochblech in feine Nudelstränge gepresst.
e -Dämpfen (die Lochbleche mit den Nudeln werden im einem Dämpfer 3 Min. bei ca. 4 bar bei 100 - 110 °C nicht ganz gar gekocht (Instanteigenschaften der Nudeln)
f - Frittieren
g - Die Nudeln werden für 50 sec in 155 - 160 °C heißem Palmfett frittiert. Anschließend Abtropfen des überschüssigen Fettes, Abkühlen der Nudeln und Verpacken - durch das Frittieren werden die Nudeln knuspriger, schmackhafter und haltbarer

Die Nudeln wurden im Geruch (Aroma durch Schnüffeln) und Geschmack (im Mund) bewertet. Das in Tabelle 8 zusammengefasste Resultat der organoleptischen Untersuchung (7 Testpersonen) zeigte, dass das eingekapselte Aroma gegenüber dem sprühgetrockneten Aroma bei gleicher Dosierung immer noch eine deutliche Wahrnehmbarkeit und Erkennbarkeit aufwies, während das sprühgetrocknete Aroma und das in Kugeln eingekapselte Aroma praktisch nicht mehr als solche erkennbar waren.

**Tabelle 8**

| | Kapseln | Kugeln* | Nichteingekapseltes sprühgetrocknetes Produkt |
|---|---|---|---|
| Nach dem Pressen | zwieblig, grün deutlich nach Lauch | Schwächer als Kapseln | leicht nach Lauch, ziemlich schwach |
| Nach dem Schneiden | grün, Lauch, schwächer als Teigprobe | zu schwach | leicht zwieblig, schwach |
| Nach dem Dämpfen | leicht Lauch, grün schwach, aber erkennbar | zu schwach | zu schwach |
| Fertige Nudeln | leicht nach Lauch | zu schwach | zu schwach |

| | | | |
|---|---|---|---|
| * Matrixeingebettetes Aroma (Kugeln) wurde hier im Vergleich zu Kapseln getestet, um die Unterschiede zwischen Kapseln (coextrudiert) und Kugeln (Aroma emulgiert, extrudiert) darzustellen. | | | |

### Beispiel 6 (Trocknung mit Siliciumdioxid)

15 g Natriumalginat (Typ Protanal LF 20/60, FMC Biopolymer) wurden in 985 g entmineralisiertem Wasser unter Einsatz eines Hochgeschwindigkeitsmischers des Typs Ultra-Turrax gelöst, bis die wässrige Lösung klar wurde. Die Alginatlösung wurde einige Stunden vor ihrer Verwendung zubereitet, um eine vollständige Hydratation der Alginatketten zu ermöglichen. 2 g Lauchgeschmackskonzentrat wurden in 98 g neutralem Öl (Typ Miglyol, CONDEA Chemie GmbH) gelöst. Die zwei Lösungen wurden getrennt mittels Zahnradpumpen aus zwei Vorratstanks zu einem vibrierenden Zweiwege-Düsenkopf geführt. Das Düsenkopf-System umfasste eine innere Düse mit 150 µm Durchmesser und eine äußere Düse mit 1000 µm Durchmesser. Die Flussrate der zwei Lösungen wurde so eingestellt, dass sie einen laminaren Fluss aus der Düse bildeten, 400 g pro Stunde Aromalösung (Lauch) durch die innere Düse und 2800 g pro Stunde Alginatlösung durch die äußere Düse. Die Vibration wurde so eingestellt, dass sie den Stahl unterbrach und sich homogene, diskrete Tropfen bildeten. Bei einer Frequenz von 130 Hz wurden Zwei-Phasen-Tropfen von etwa 2 mm Durchmesser gebildet. Die Tropfen fielen in ein 10 %-iges Calciumchloridreaktionsbad, so dass sich sofort eine feste Schicht um das flüssige Füllmaterial bildete. Der Calciumbadreaktor bestand aus einem Röhrensystem, durch das die Calciumchloridlösung hindurchfloss und so kontinuierlich die frisch gelierten Kapseln zur Trenneinheit transportierte. Die Flussrate der Pumpe für die Calciumchloridlösung wurde auf eine Gelierzeit von etwa einer Minute eingestellt. Die gelierten Kapseln wurden durch den Röhrenreaktor transportiert und dann auf einem 800 µm Sieb abgetrennt. Die gesiebten Kapseln wurden mit Leitungswasser gewaschen. Die nassen Gelkapseln besaßen wegen der Synärese, die während des Gelierschrittes stattfindet, nur noch etwa 1,6 mm Durchmesser, mit einem Wassergehalt des Hüllenmaterials von 98 %. Es wurden 520 g nasse Kapseln erhalten, und diese wurden mit 260 g Siliciumdioxid (Sipernat S50, Degusssa) für etwa 10 Minuten gemischt und dann vom Siliciumdioxid auf einem vibrierenden 800 µm Rundsieb abgetrennt. 120 g trockener Kapseln mit einer Partikelgröße von 1,2 mm wurden produziert. Der Wassergehalt des Hüllenmaterials der trockenen Kapseln betrug 49 %. Die trockene Mikrokapsel umfasste insgesamt zu 83 Gew.-% flüssiges Füllmaterial der Wassergehalt betrug 8,4 Gew.-%.

### Beispiel 7 (Vortrocknung plus Trocknung mit Siliciumdioxid)

15 g Natriumalginat (Typ Protanal LF 20/60, FMC Biopolymer) wurden in 975 g demineralisiertem Wasser unter Einsatz eines Hochgeschwindigkeitsmischers des Typs Ultra-Turrax gelöst. 50 g Erdbeeraroma und 1 g Polyglycerolester (Typ PGPR 90, Danisco Cultor) wurden in 39 g neutralem Öl gelöst, 10 g Leitungswasser wurden hinzugefügt, zunächst für etwa 5 Minuten langsam gemischt und dann mit einem Hochgeschwindigkeitsmischer des Typs Ultra-Turrax für etwa eine Minute homogenisiert, um eine stabile Wasser-in-Öl-Emulsion zu bilden. Die zwei Lösungen wurden zu einem vibrierenden Zweiwege-Düsenkopf mit einem inneren Durchmesser von 150 µm und einem äußeren Durchmesser von 1000 µm geleitet. Die Flussraten wurden für die Aromalösung auf 300 g pro Stunde und für die Hülllösung auf 3000 g pro Stunde eingestellt, die Vibrationsfrequenz auf 180 Hz. Zwei-Phasen-Tropfen von etwa 1,8 mm Durchmesser wurden geformt. Die Tropfen fielen in ein 10%-iges Calciumchloridreaktionsbad. Die Flussrate der Pumpe für das Calciumchloridreaktionsbad wurde auf eine Gelierzeit von etwa 1 Minute eingestellt. Die gelierten Kapseln wurden auf einem 800 µm-Sieb abgetrennt und gewaschen. Die nassen Gelkapseln besaßen einen Durchmesser von 1,7 mm und einen Wassergehalt des Hüllmaterials von 97 %. 605 g nasser Kapseln wurden erhalten und zum Zwecke der Vortrocknung in einem Fließbetttrockner (Typ STREA 1, Aromatic) mit einem Luftfluss von 100 m³ pro Stunde und einer Einlasstemperatur von 50 °C für etwa 10 Minuten vorgetrocknet. 490 g vorgetrockneter Kapseln wurden erhalten, mit 200 g Siliciumdioxid (Sipernat S50, Degussa) für etwa 5 Minuten gemischt und dann auf einem vibrierenden 800 µm-Rundsieb abgetrennt. 140 g trockener Kapseln mit einer Partikelgröße von 1,1 mm wurden produziert. Der Wassergehalt des Hüllmaterials betrug 49 %. Die gesamte Mikrokapsel umfasste 79,1 % flüssiges Füllmaterial, der Wassergehalt betrug 10,2 %.

### Beispiel 8 (Trocknung mit Siliciumdioxid)

15 g Natriumalginat (Typ Protanal LF 20/60, FMC Biopolymer) und 10 g GellanGum (Typ Kelcogel, Kelco) wurden in 975 g demineralisiertem Wasser unter Einsatz eines Hochgeschwindigkeitsmischers des Typs Ultra-Turrax gelöst. 500 g einer Pfefferminzaroma-Lösung wurden zubereitet. Die zwei Lösungen wurden zu einem vibrierenden Zwei-Wege-Düsenkopf mit einem inneren Durchmesser von 200 µm und einem äußeren Durchmesser von 500 µm geführt. Die Flussraten wurden auf 500 g pro Stunde Aromalösung und 800 g pro Stunde Hülllösung eingestellt, die Vibrationsfrequenz auf 200 Hz. Ein Zwei-Phasen-Tropfen von etwa 1,4 µm Durchmesser wurde geformt. Die Tropfen fielen in einen Röhrenreaktor mit 5 % Calciumchloridlösung. Die Flussrate der Pumpe für das Calciumchloridreaktionsbad wurde auf eine Gelierzeit von etwa 10 Sekunden eingestellt. Die gelierten Kapseln wurden auf einem 800 µm-Sieb abgetrennt und gewaschen. Die nassen Gelkapseln besaßen einen Durchmesser von 1,2 mm und einen Wassergehalt des Hüllmaterials von 96,5 %. Die erhaltenen 1100 g nasser Kapseln wurden mit 275 g Siliziumdioxid (Sipernat S50, Degussa) für etwa 10 Minuten gemischt und dann vom Siliziumdioxid auf einem vibrierenden 800 µm-Rundsieb abgetrennt. Eine Menge von 540 g trockener Kapseln mit einer Partikelgröße von 0,9 mm wurde produziert. Der Wassergehalt des Hüllmaterials betrug 46 %. Die gesamte Mikrokapsel umfasste 93,1 % flüssiges Füllmaterial, der Wassergehalt betrug 3,2 %.

### Beispiel 9 (Kontinuierlicher Gelierprozeß; kurze Gelierzeit)

Dieses Beispiel dient dazu, die Verbesserung zu demonstrieren, die in Bezug auf die Aromakomponenten-Einkapselung in Alginatmikrokapseln erreicht werden kann, wenn der Gelierprozess als kontinuierlicher Ein-Minuten-Vorgang durchgeführt wird, im Vergleich mit den als Batchvorgang durchgeführten Verkapselungstechnologien, bei denen die gelierten Kapseln für Stunden im Kontakt mit dem Gelierbad bleiben.

50 g Natriumalginat wurden in 1950 g demineralisiertem Wasser unter Verwendung eines Hochgeschwindigkeitsmischers des Typs Ultra-Turrax gelöst. 250 g Modell-Aroma wurden in 750 g neutralem Öl gelöst. Das Modell-Aroma bestand aus Aromakomponenten, die ein großes Spektrum von Wasser/Öl-Löslichkeiten angegeben durch log K_{o/w}-Werte abdeckten, vergleiche die nachfolgende Tabelle 9.

**Tabelle 9**

| **Komponente** | **Menge % (w/w)** | **Log K_{o/w}** |
|---|---|---|
| Anisalkohol | 5 | 0,95 |
| Ethylpropionat | 5 | 1,24 |
| Benzaldehyd | 5 | 1,64 |
| Isoamylacetat | 5 | 2,12 |
| Ethylcaprylat | 5 | 3,9 |

Die zwei Lösungen (Alginat, Aroma) wurden zu einem vibrierenden Zwei-Wege-Düsenkopf mit einem inneren Durchmesser von 150 µm und einem äußeren Durchmesser von 500 µm geleitet. Die Flussraten wurden für die Aromalösung auf 500 g pro Stunde und für die Hüllenlösung auf 1000 g pro Stunde eingestellt, die Vibrationsfrequenz auf 220 Hz.

Für das bevorzugte kurze kontinuierliche Gelierverfahren fielen die gebildeten diskreten Tropfen in einen Röhrenreaktor, der mit 5%-igem Calciumchlorid gefüllt war, und wurden so transportiert, dass die Verweilzeit 1 Minute betrug. Die entstandenen nassen Kapseln wurden gesiebt und mit Leitungswasser gewaschen.

Das Ergebnis einer einminütigen Kapselproduktion (entsprechend 8,3 g eingekapselter Aromalösung) wurde dann in 200 ml 1 %-iger wässriger Natriumcitratlösung gelöst. Die Mischung wurde dann für vier Stunden in einem Perforator mit Diethylether extrahiert. Der Dietyhletherextrakt wurde mittels HRGC/MS analysiert. Die Ergebnisse wurden basierend auf der Oberfläche der GC/MS peaks für jede Komponente pro Gramm eingekapselter Aromalösung bewertet.

Für das Batch-Gelier-Verfahren fielen die gebildeten diskreten Tropfen in einem 5% Calciumchlorid enthaltenden Reaktor mit einer Verweilzeit von zwei Stunden. Die gebildeten nassen Kapseln wurden danach gesiebt und mit Leitungswasser gewaschen. Das selbe analytische Protokoll wie für das Kurz-Gelier-Zeit-Verfahren wurde durchgeführt.

10 g Modell-Aromalösung wurden in 200 ml 1 %-iger wässriger Natriumcitratiösung dispergiert. Die Mischung wurde in einem Perforator für 4 Stunden mit Dietyhlether extrahiert und wie oben beschrieben evaluiert.

Die Aromaretention für jede Aromakomponente während des kurzen kontinuierlichen Gelierverfahrens und des langen Gelier-Batch-Verfahrens wurde anhand der Menge der Modell-Aromalösung berechnet, das ursprünglich durch das Düsensystem geflossen war und theoretisch eingekapselt worden ist, die Ergebnisse sind in Tabelle 10 zusammengefasst.

**Tabelle 10**

| Aromaretention: | | |
|---|---|---|
| **Komponenten** | **kurze Gelierzeit (kontinuierlich)** | **lange Gelierzeit (Batch)** |
| Anisalkohol | 60 % | 6 % |
| Ethylpropionat | 61 % | 0 % |
| Benzaldehyd | 82 % | 11 % |
| Isoamylacetat | 80 % | 18,5 % |
| Ethylcaprylat | 90 % | 90 % |

Im Verfahren mit kurzer Gelierzeit war also die Aromaretention der Substanzen mit einem log K_{o/w} < 3,9 deutlich besser als im Verfahren mit langer Gelierzeit.

### Beispiel 10 (Vergleich unterschiedlicher Trocknungsverfahren)

Dieses Beispiel dient dazu, den Unterschied zu demonstrieren, der zwischen einem üblichen konvektiven Trocknungsverfahren (Fließbetttrockner) und dem Trocknungsverfahren unter Verwendung wasserbindender Substanzen in Bezug auf die Aromaretention besteht.

Eine Probe der nassen Kapselproduktion, hergestellt gemäß dem Verfahren mit kurzer Gelierzeit, wie es im Beispiel 4 beschrieben wurde, wurde nach dem Waschen in zwei gleiche Chargen von 200 g geteilt.

Die erste Charge wurde durch Hinzufügen von 100 g Siliciumdioxid zu den nassen Kapseln getrocknet. Die Substanzen wurden für 10 Minuten gemischt und die dann getrockneten Kapseln anschließend manuell auf einem 800 µm-Sieb vom Siliciumdioxid abgetrennt. 60 g getrockneter Kapseln wurden erhalten. Der Wassergehalt des Hüllenmaterials der getrockneten Kapseln betrug 45 % (entsprechend 7 % Wassergehalt und 84,2 % flüssigem Füllmaterial bezogen auf die Masse der Gesamtkapsel).

Die zweite 200 g Charge wurde in einem Fließbettrockner (Typ STREA 1, Aeromatic) bei 30 °C Einlasstemperatur und 100 m³ pro Stunde Luftfluss getrocknet, um eine Menge von 60 g getrockneter Kapseln zu erhalten. Der Wassergehalt des Hüllenmaterials der getrockneten Kapseln betrug 62 % (korrespondierend mit 14,4 % Wassergehalt und 76,8 % flüssigem Füllmaterial bezogen auf die Masse der Gesamtkapsel).

Die unterschiedlichen Mengen flüssigen Füllmaterials, die in den zwei getrockneten Kapseltypen gefunden wurden, zeigen bereits den Unterschied im Bezug auf die Aromaretention, die die beiden Trocknungsprozesse mit sich bringen. Die siliziumdioxidgetrockneten Kapseln besaßen 50,52 g (84,2 %) flüssiges Füllmaterial, die im Fließbett getrockneten Kapseln besaßen hingegen nur 46,08 g (76,8 %) flüssiges Füllmaterial.

Die Details der Retention jeder Aromakomponente werden in der nachfolgenden Tabelle 11 gezeigt. Die verwendete analytische Methode war identisch mit der in Beispiel 9 beschriebenen.

**Tabelle 11**

| | **Trocknung "wasserbindende" Substanzen: % Retention** | **Konvektive Trocknung: % Retention** |
|---|---|---|
| Anisalkohol | 33 % | 5 % |
| Ethylpropionat | 50 % | 4 % |
| Benzaldehyd | 80 % | 52 % |
| lsoamylacetat | 95 % | 60 % |
| Ethylcaprylat | 0 % | 65 % |

### Beispiel 11 (Einfluss des Wassergehalts in der Hülle auf die Hitzestabilität)

Dieses Beispiel unterstreicht die Bedeutung des Wassergehaltes, der innerhalb des Hüllenmaterials der getrockneten Kapseln vorhanden ist, um eine effiziente Hitzestabilität des eingekapselten Aromas während eines Erhitzungsverfahrens zu gewährleisten.

Kapseln mit Käsearoma wurden einem Crackerteig hinzugefügt und dann gebacken. Die Kapseln besaßen einen unterschiedlichen Wassergehalt (unterschiedliche Trocknungsgrade). Die Aromadosierung wurde für alle Versuche identisch gehalten.

Die Cracker wurden gemäß dem folgenden Rezept (Tabelle 12) zubereitet:

**Tabelle 12**

| | **Zutaten** | **Menge (%)** |
|---|---|---|
| 1 | Pflanzenfett | 7,98 |
| 2 | Industriezucker | 1,55 |
| 3 | Fructosesirup | 1,55 |
| 4 | Salz | 1,15 |
| 5 | Weizenmehl (Typ Cracker) | 66,53 |
| 6 | Ammoniumbicarbonat | 0,89 |
| 7 | Malzextraktsirup | 0,806 |
| 8 | Natriummonophosphat | 0,665 |
| 9 | Natriumbicarbonat | 0,55 |
| 10 | Zitronensäure | 0,066 |
| 11 | bakterielle Protease | 0,027 |
| 12 | Natriummetabisulfit | 0,016 |
| 13 | Wasser | 19,37 |

### Crackerzubereitungsverfahren

1. Die Zutaten 1,2,3,4 und 13 (70 °C) mischen, bis sie vollständig gelöst sind.
2. 5 - 12 und die gewünschte Menge von Kapseln dem Teig hinzufügen.
3. Für etwa 10 Minuten mischen.
4. Den Teig für zwei Stunden bei Raumtemperatur stehen lassen.
5. Den Teig ausrollen (2 mm) und in Crackerform schneiden.
6. In einem Ofen bei 185 °C (den Ofen auf 210 °C vorheizen) für 4 Minuten backen.

Die Cracker wurden durch eine Sensorik-Testgruppe (10 Personen) in Bezug auf Geschmacksintensität im Mund bewertet. Die Bewertungsskala reichte von 1 - 5:
0 kein Geschmack
1 sehr schwache Aromanote, beinahe nicht erkennbar
2 zu schwache Aromanote
3 akzeptable Geschmacksnote
4 gute und starke Geschmacksnote
5 zu starke Geschmacksnote

Die Ergebnisse sind in Tabelle 13 zusammengefasst.

**Tabelle 13**

| Kapseltyp | Massenverhältnis Wasser / Kapselhülle | Massenverhältnis Kapsel / Cracker | Massenverhältnis Aroma / Cracker | Sensorische Benotung |
|---|---|---|---|---|
| nass | 95 % | 3,5 % | 0,04 % | 1 |
| leicht getrocknet | 91 % | 2,7 % | 0,04 % | 1 |
| mittel getrocknet | 66,7 % | 1,3 % | 0,04 % | 2 |
| getrocknet | 38,9 % | 1 % | 0,04 % | 4 |

Die getrockneten Kapseln vermittelten aufgrund ihrer hohen Hitzestabilität die deutlich besten sensorischen Ergebnisse.

### Beispiel 12 (Auswirkungen unterschiedlicher Aroma-Applikationsformen)

Dieses Beispiel zeigt die unterschiedlichen sensorischen Bewertungen von Lauchgeschmack, der in flüssiger Form, in sprühgetrockneter Form und in Kapselform in Cracker appliziert wurde.

Die Cracker wurden wie in Beispiel 6 beschrieben zubereitet und gebacken, jedoch bei 200 °C für 4 Minuten. Die in Tabelle 14 zusammengefasste sensorische Bewertung der drei verschiedenen Aromaausführungen basiert auf derselben Skalendefinition wie in Beispiel 11.

**Tabelle 14**

| **Aromatyp** | **Massenverhältnis (Aroma und Träger) z. B. Kapsel/Cracker** | **Massenverhältnis Aroma/Cracker** | **Sensorische Werte** |
|---|---|---|---|
| Flüssig | 3,5 % | 0,04 % | 1 |
| Sprühgetrocknet | 2,7 % | 0,04 % | 2 |
| Kapsel | 1,3 % | 0,04 % | 4 |

Das in Alginatkapseln eingekapselte Laucharoma zeigte die besten Ergebnisse in Bezug auf die Backstabilität verglichen mit den Standardaromaausführungen in flüssiger bzw. sprühgetrockneter Form.

### Weitere Aspekte der Erfindung

Aspekt 1. Mononuklear gefüllte nahtlose Mikrokapsel, umfassend:
   - eine Kapselhülle aus einem gehärteten Kapselmaterial auf Basis eines sauren Polysaccharids und
   - allseitig von der Kapselhülle umschlossen ein Füllmaterial, umfassend eine organoleptisch wirksame Menge eines Aromas,
   wobei die Mikrokapsel hitzestabil und/oder kochstabil und/oder frittierstabil ist und der Wasseranteil in der Kapselhülle auf einen Wert ≤50 Gew.-% eingestellt ist, bezogen auf die Gesamtmasse der Kapselhülle.
Aspekt 2. Mononuklear gefüllte Mikrokapsel nach Aspekt 1, wobei das gehärtete Kapselmaterial für die Mikrokapseln eine durch Kontaktieren mit ein-, zwei- oder höherwertigen Kationen gehärtete Substanz umfasst.
Aspekt 3. Mononuklear gefüllte Mikrokapsel nach einem der vorangehenden Aspekte, wobei das gehärtete Kapselmaterial für die Mikrokapseln aus der Gruppe ausgewählt ist, die aus Alginat, Pektat, Pektinat, Carrageenan, Gellan und deren Mischungen besteht
Aspekt 4. Mononuklear gefüllte Mikrokapsel nach einem der vorangehenden Aspekte wobei das im Füllmaterial enthaltene Aroma zumindest 10 Gew.-%, bezogen auf die Gesamtmasse des Aromas im Füllmaterial, an einem oder mehreren Aromastoffen mit einem log Ko/w < 2 umfasst.
Aspekt 5. Mononuklear gefüllte Mikrokapsel nach einem der vorangehenden Aspekte, wobei das im Füllmaterial enthaltene Aroma zumindest 10 Gew.-%, bezogen auf die Gesamtmasse des Aromas im Füllmaterial, an einem oder mehreren Aromastoffen umfasst, für die gilt: 1 < log Ko/w < 2.
Aspekt 6. Mononuklear gefüllte Mikrokapsel nach einem der vorangehenden Aspekte 1-4, wobei das im Füllmaterial enthaltene Aroma zumindest 10 Gew.-%, bezogen auf die Gesamtmasse des Aromas im Füllmaterial, an einem oder mehreren Aromastoffen umfasst, für die gilt: log Ko/w < 1.
Aspekt 7. Lebensmittelzusammensetzung, umfassend:
   - eine oder mehrere mononuklear gefüllte Mikrokapseln nach einem der vorangehenden Aspekte und
   - ein Trägermaterial für die Mikrokapsel(n).
Aspekt 8. Verfahren zur Herstellung mononuklear gefüllter Mikrokapseln nach einem der Aspekte 1-6, mit folgenden Schritten:
   - Bereitstellen eines flüssigen, eine organoleptisch wirksame Menge eines Aromas umfassenden Füllmaterials für die Mikrokapseln,
   - Bereitstellen einer vorzugsweise wässrigen Lösung oder Dispersion eines härtbaren Kapselmaterials auf Basis eines sauren Polysaccharids,
   - Bildung diskreter Tropfen aus dem flüssigen Füllmaterial für die Mikrokapseln und der Lösung oder Dispersion des härtbaren Kapselhüllmaterials, so dass das härtbare Kapselmaterial das flüssige Füllmaterial in den Tropfen allseitig umschließt,
   - Härten des härtbaren Kapselhüllmaterials, so dass nahtlose Polysaccharid-Kapseln gebildet werden, die jeweils Füllmaterial mononuklear umfassen und hitzestabil und/oder kochstabil und/oder frittierstabil sind.
   - Trocknen der gebildeten Kapselhülle, bis der Wasseranteil in der Kapselhülle einen Wert ≤50 Gew.-% erreicht, bezogen auf die Gesamtmasse der Kapselhülle.
Aspekt 9. Verfahren nach Aspekt 8, wobei die nahtlosen Polysaccharid-Kapseln zum Trocknen der gebildeten Kapselhülle mit einer wasseradsorbierenden oder wasserbindenden Substanz kontaktiert werden.
Aspekt 10. Verfahren nach einem der Aspekte 8 bis 9, wobei das härtbare Kapselhüllmaterial durch Kontakt mit mehrwertigen Kationen härtbar ist, wobei die diskreten Tropfen zum Härten des härtbaren Kapselhüllmaterials mit einer Lösung kontaktiert werden, die mehrwertige Kationen enthält.
Aspekt 11. Verfahren nach einem der Aspekte 8- 10, wobei die diskreten Tropfen zum Härten des härtbaren Kapselhüllmaterials für einen Zeitraum von maximal 1 Minute mit der Lösung kontaktiert werden, die mehrwertige Kationen enthält.
Aspekt 12. Verfahren nach einem der Aspekte 10 oder 11, wobei die gebildeten nahtlosen Polysaccharid-Kapseln vor dem Trocknen der gebildeten Kapselhülle gewaschen werden, um mehrwertige Kationen von der Kapseloberfläche zu entfernen.

## Patentansprüche

1. Mononuklear gefüllte nahtlose Mikrokapsel, umfassend:
- eine Kapselhülle aus einem gehärteten Kapselmaterial auf Basis eines sauren Polysaccharids und
- allseitig von der Kapselhülle umschlossen ein Füllmaterial, umfassend eine organoleptisch wirksame Menge eines Aromas,
wobei die Mikrokapsel hitzestabil und/oder kochstabil und/oder frittierstabil ist und der Wasseranteil in der Kapselhülle auf einen Wert ≤50 Gew.-% eingestellt ist, bezogen auf die Gesamtmasse der Kapselhülle, herstellbar durch ein Verfahren mit folgenden Schritten:
- Bereitstellen eines flüssigen, eine organoleptisch wirksame Menge eines Aromas umfassenden Füllmaterials für die Mikrokapseln,
- Bereitstellen einer vorzugsweise wässrigen Lösung oder Dispersion eines härtbaren Kapselmaterials auf Basis eines sauren Polysaccharids,
- Bildung diskreter Tropfen aus dem flüssigen Füllmaterial für die Mikrokapseln und der Lösung oder Dispersion des härtbaren Kapselhüllmaterials, so dass das härtbare Kapselmaterial das flüssige Füllmaterial in den Tropfen allseitig umschließt,
- Härten des härtbaren Kapselhüllmaterials, so dass nahtlose Polysaccharid-Kapseln gebildet werden, die jeweils Füllmaterial mononuklear umfassen und hitzestabil und/oder kochstabil und/oder frittierstabil sind.
- Trocknen der gebildeten Kapselhülle, bis der Wasseranteil in der Kapselhülle einen Wert ≤ 50 Gew.-% erreicht, bezogen auf die Gesamtmasse der Kapselhülle.

2. Mononuklear gefüllte Mikrokapsel nach Anspruch 1, wobei das gehärtete Kapselmaterial für die Mikrokapseln eine durch Kontaktieren mit ein-, zwei- oder höherwertigen Kationen gehärtete Substanz umfasst.

3. Mononuklear gefüllte Mikrokapsel nach einem der vorangehenden Ansprüche, wobei das gehärtete Kapselmaterial für die Mikrokapseln aus der Gruppe ausgewählt ist, die aus Alginat, Pektat, Pektinat, Carrageenan, Gellan und deren Mischungen besteht

4. Mononuklear gefüllte Mikrokapsel nach einem der vorangehenden Ansprüche, wobei das im Füllmaterial enthaltene Aroma zumindest 10 Gew.-%, bezogen auf die Gesamtmasse des Aromas im Füllmaterial, an einem oder mehreren Aromastoffen mit einem log Ko/w < 2 umfasst.

5. Mononuklear gefüllte Mikrokapsel nach einem der vorangehenden Ansprüche, wobei das im Füllmaterial enthaltene Aroma zumindest 10 Gew.-%, bezogen auf die Gesamtmasse des Aromas im Füllmaterial, an einem oder mehreren Aromastoffen umfasst, für die gilt: 1 < log Ko/w < 2.

6. Mononuklear gefüllte Mikrokapsel nach einem der vorangehenden Ansprüche 1-4, wobei das im Füllmaterial enthaltene Aroma zumindest 10 Gew.-%, bezogen auf die Gesamtmasse des Aromas im Füllmaterial, an einem oder mehreren Aromastoffen umfasst, für die gilt: log Ko/w < 1.

7. Lebensmittelzusammensetzung, umfassend:
- eine oder mehrere mononuklear gefüllte Mikrokapseln nach einem der vorangehenden Ansprüche und
- ein Trägermaterial für die Mikrokapsel(n).
